(19) Europäisches Patentamt / European Patent Office / Office européen des brevets

(11) **EP 4 757 380 A1**

(12) **EUROPEAN PATENT APPLICATION**
published in accordance with Art. 153(4) EPC

(43) Date of publication:
**10.06.2026 Bulletin 2026/24**

(21) Application number: **23946955.4**

(22) Date of filing: **28.07.2023**

(51) International Patent Classification (IPC):
**H04W 24/02** (2009.01)

(52) Cooperative Patent Classification (CPC):
**H04W 24/02**

(86) International application number:
**PCT/CN2023/109981**

(87) International publication number:
**WO 2025/024999 (06.02.2025 Gazette 2025/06)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventors:
• **CHEN, Wenhong
Dongguan, Guangdong 523860 (CN)**
• **TIAN, Wenqiang
Dongguan, Guangdong 523860 (CN)**

(74) Representative: **Penza, Giancarlo
Bugnion S.p.A.
Viale Lancetti, 17
20158 Milano (IT)**

(54) **METHOD AND APPARATUS FOR DETERMINING PROCESSING DELAY REQUIREMENT, AND TERMINAL DEVICE AND NETWORK DEVICE**

(57) Provided in the embodiments of the present disclosure are a method and apparatus for determining a processing time delay requirement, and a terminal device and a network device. The method comprises: on the basis of a first model, a terminal device determining a CSI processing delay requirement corresponding to CSI reporting, wherein the CSI reporting is AI/ML-based CSI reporting, and the first model is a model used for the CSI reporting; and on the basis of the CSI processing delay requirement corresponding to the CSI reporting, the terminal device determining whether to perform the CSI reporting and/or whether to update the CSI reporting.

The network device determines a CSI computation delay requirement corresponding to a CSI report based on a first model. The terminal device determines, based on the first model, the CSI computation delay requirement corresponding to the CSI report. The CSI report is a AI/ML-based CSI report, and the first model is a model used for CSI reporting — 901

The network device triggers the terminal device to perform the CSI reporting based on the CSI computation delay requirement corresponding to the CSI report. The terminal device determines whether to perform the CSI reporting and/or whether to update the CSI report based on the CSI computation delay requirement corresponding to the CSI report — 902

**FIG. 9**

**Description**

TECHNICAL FIELD

Embodiments of the present disclosure relate to the technical field of mobile communication, and in particular to a method and an apparatus for determining a computation delay requirement, a terminal device, and a network device.

BACKGROUND

A network device may trigger a semi-persistent or aperiodic Channel State Information (CSI) reporting through Downlink Control Information (DCI), but sufficient processing time needs to be reserved to the terminal device for corresponding CSI measurement and preparation of the Physical Uplink Shared Channel (PUSCH) carrying the CSI. The delay requirement that this processing time needs to meet is the CSI computation delay requirement.
CSI reporting can be implemented based on an Artificial Intelligence/Machine Learning (AI/ML) model, which is called CSI reporting based on an AI/ML model or AI/ML-based CSI reporting. At present, design of the CSI computation delay requirement does not consider the processing complexity and computation delay required for the AI/ML-based CSI report model. Moreover, inference based on different AI/ML models has different complexity and different processing time. If a fixed CSI computation delay requirement is adopted, it is difficult to support flexible switching between AI/ML models.

SUMMARY

Embodiments of the present disclosure provide a method and an apparatus for determining a computation delay requirement, a terminal device, a network device, a chip, a computer-readable storage medium, a computer program product, and a computer program.
According to a first aspect, an embodiment of the present disclosure provides a method for determining a computation delay requirement. The method includes the following operations.
The terminal device determines a channel state information (CSI) computation delay requirement corresponding to a CSI report based on a first model, wherein the CSI report is an AI/ML-based CSI report, and the first model is a model used for CSI reporting.
The terminal device determines whether to perform the CSI reporting and/or whether to update the CSI report, based on the CSI computation delay requirement corresponding to the CSI report.
In a second aspect, an embodiment of the present disclosure provides a method for determining a computation delay requirement. The method includes the following operations.
The network device determines a CSI computation delay requirement corresponding to a CSI report based on a first model, wherein the CSI report is an AI/ML-based CSI report, and the first model is a model used for CSI reporting;
The network device triggers the terminal device to perform the CSI reporting based on the CSI computation delay requirement corresponding to the CSI report.
According to a third aspect, an embodiment of the present disclosure provides an apparatus for determining a computation delay requirement, which is applied to a terminal device, and the apparatus includes a determination unit.
The determination unit is configured to determine a CSI computation delay requirement corresponding to a CSI report based on a first model, wherein the CSI report is an AI/ML-based CSI report, and the first model is a model used for CSI reporting; determining whether to perform the CSI reporting and/or whether to update the CSI report based on the CSI computation delay requirement corresponding to the CSI report.
According to a fourth aspect, an embodiment of the present disclosure provides an apparatus for determining a computation delay requirement, which is applied to a network device, and the apparatus includes a determination unit and a trigger unit.
The determination unit is configured to determine a CSI computation delay requirement corresponding to a CSI report based on a first model, wherein the CSI report is an AI/ML-based CSI report, and the first model is a model used for CSI reporting;
The trigger unit is configured to trigger the terminal device to perform the CSI reporting based on a CSI computation delay requirement corresponding to the CSI report.
According to a fifth aspect, an embodiment of the present disclosure provides a terminal device including a processor and a memory. The memory is configured to store a computer program, and the processor is configured to call and run the computer program stored in the memory to perform the method of determining the computation delay requirement described above.
According to a sixth aspect, an embodiment of the present disclosure provides a network device including a processor and a memory. The memory is configured to store a computer program, and the processor is configured to call and run the computer program stored in the memory to perform the method of determining the computation delay requirement described above.

According to a seventh aspect, an embodiment of the present disclosure provides a chip, the chip including: a processor configured to call and run a computer program from a memory, so that a device on which the chip is mounted performs the above-described method for determining a computation delay requirement.

According to an eighth aspect, an embodiment of the present disclosure provides a computer-readable storage medium, in which a computer program is stored, and the computer program, when executed by at least one processor, implements the method for determining a computation delay requirement described above.

According to a ninth aspect, an embodiment of the present disclosure provides a computer program product including computer program instructions that cause a computer to perform the method for determining a computation delay requirement described above.

According to a tenth aspect, an embodiment of the present disclosure provides a computer program. The computer program, when ruuning on a computer, causes the computer to execute the method for determining the computation delay requirement described above.

According to the technical solutions of the embodiments of the present disclosure, in consideration of processing complexity and computation delay required for the CSI report based on an AI/ML model (referred to as a model for short), the terminal device/network device determines a CSI computation delay requirement corresponding to the CSI report based on the first model, so that different CSI computation delay requirements can be determined for different models, thereby supporting flexible switching between different AI/ML models without exceeding the processing capability of the terminal device, and ensuring the accuracy of CSI feedback.

BRIEF DESCRIPTION OF THE DRAWINGS

The accompanying drawings described herein are intended to provide a further understanding of the present disclosure, and constitute a part of the present disclosure, and the schematic embodiments of the present disclosure and the description thereof are intended to explain the present disclosure, and do not constitute an undue limitation of the present disclosure. In the drawings:

FIG. 1 is a schematic diagram of an application scenario according to an embodiment of the present disclosure.
FIG. 2 is a schematic diagram of a CSI reporting method with different periodicities.
FIG. 3 is a first schematic diagram of a CSI computation delay requirement.
FIG. 4 is a second schematic diagram of a CSI computation delay requirement.
FIG. 5 is a third schematic diagram of a CSI computation delay requirement.
FIG. 6 is a schematic diagram of an example of a neuron structure.
FIG. 7 is a schematic diagram of an example of a neural network.
FIG. 8 is a schematic diagram of a neural network for CSI feedback.
FIG. 9 is a first flowchart of a method for determining a computation delay requirement according to an embodiment of the present disclosure.
FIG. 10 is a second flowchart of a method for determining a computation delay requirement according to an embodiment of the present disclosure.
FIG. 11 is a third flowchart of a method for determining a computation delay requirement according to an embodiment of the present disclosure.
FIG. 12 is a first schematic diagram of a composition of an apparatus for determining a computation delay requirement according to an embodiment of the present disclosure.
FIG. 13 is a second schematic diagram of a composition of an apparatus for determining a computation delay requirement according to the embodiment of the present disclosure.
FIG. 14 is a schematic structural diagram of a communication device according to an embodiment of the present disclosure.
FIG. 15 is a schematic structural diagram of a chip according to an embodiment of the present disclosure.
FIG. 16 is a schematic block diagram of a communication system according to an embodiment of the present disclosure.

DETAILED DESCRIPTION

Hereinafter, the technical solutions in the embodiments of the present disclosure will be described with reference to the accompanying drawings in the embodiments of the present disclosure, and it is apparent that the described embodiments are part of the embodiments of the present disclosure, but not all the embodiments. Based on the embodiments in the present disclosure, all other embodiments obtained by those skilled in the art without creative work fall within the scope of protection of the present disclosure.

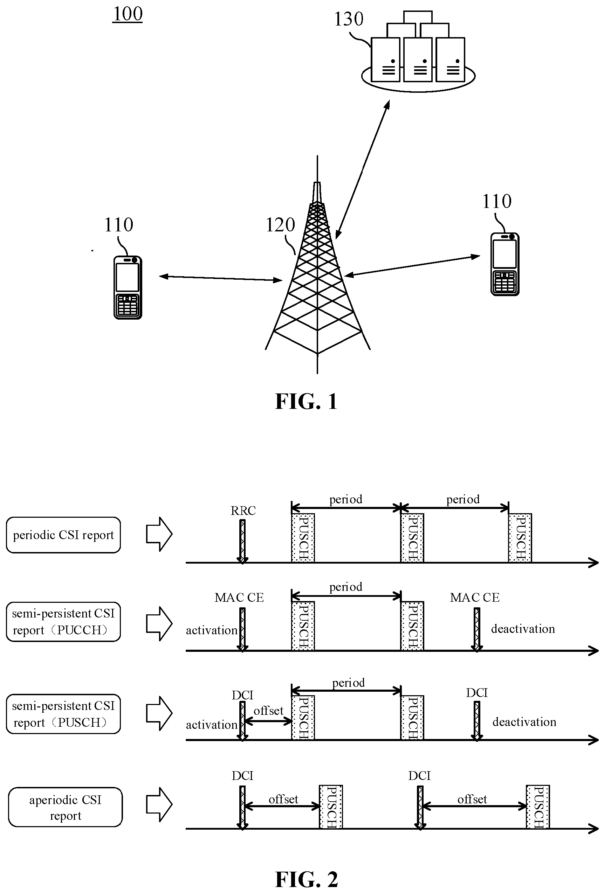

FIG. 1 is a schematic diagram of an application scenario according to an embodiment of the present disclosure.

As shown in FIG. 1, the communication system 100 may include a terminal device 110 and a network device 120. The network device 120 may communicate with the terminal device 110 through an air interface. Multi-service transmission is supported between the terminal device 110 and the network device 120.

It should be understood that the embodiments of the present disclosure are only illustrated with reference to the communication system 100, but the embodiments of the present disclosure are not limited thereto. That is, the technical solution of the embodiment of the present disclosure can be applied to various communication systems, such as a Long Term Evolution (LTE) system, an LTE Time Division Duplex (TDD), a Universal Mobile Telecommunication System (UMTS), an Internet of Things (IoT) system, and a Narrow Band Internet of Things (NB-IoT) System, an enhanced Machine-Type Communications (eMTC) system, a 5G communication system (also referred to as New Radio (NR) communication system), or a future communication system, etc.

In the communication system 100 illustrated in FIG. 1, the network device 120 may be an access network device that communicates with the terminal device 110. An access network device may provide communication coverage for a particular geographic area and may communicate with a terminal device 110 (e.g., a UE) located within that coverage area.

The network device 120 may be an Evolutionary Node B, eNB, or eNodeB in a Long Term Evolution (LTE) system, a Next Generation Radio Access Network (NG RAN) device, a base station (gNB) in an NR system, or a radio controller in a Cloud Radio Access Network (CRAN), or network device 120 may be a relay station, an access point, an in-vehicle device, a wearable device, a hub, a switch, a bridge, a router, or a network device in a future evolved Public Land Mobile Network (PLMN).

The terminal device 110 may be any terminal device including, but not limited to, a terminal device connected with the network device 120 or other terminal devices in a wired or wireless connection.

For example, the terminal device 110 may refer to an access terminal, a User Equipment (UE), a subscriber unit, a subscriber station, a mobile station, a mobile station, a remote station, a remote terminal, a mobile device, a user terminal, a terminal, a wireless communication device, a user agent, or a user device. The access terminal may be a cellular telephone, a cordless telephone, a Session Initiation Protocol (SIP) telephone, an IoT device, a satellite handheld terminal, a Wireless Local Loop (WLL) station, a Personal Digital Assistant (PDA), a handheld device with wireless communication functionality, a computing device or other processing device connected to a wireless modem, a vehicle-mounted device, a wearable device, a terminal device in a 5G network, or a terminal device in a future evolution network, or the like.

The terminal device 110 may be used for device-to-device (D2D) communication.

The wireless communication system 100 may further include a core network device 130 that communicates with the base station, and the core network device 130 may be a 5G Core (5GC) device, for example, an Access and Mobility Management Function (AMF), for another example, an Authentication Server Function (AUSF), for another example, a User Plane Function (UPF), for another example, a Session Management Function (SMF). Alternatively, the core network device 130 may also be an Evolved Packet Core (EPC) device of an LTE network, for example, a Session Management Function + Core Packet Gateway (SMF + PGW-C) device of the core network. It should be understood that the SMF + PGW-C can implement functions that the SMF and PGW-C can implement. In the process of network evolution, the core network devices may be called by other names, or a new network entity may be formed by dividing the functions of the core network, which is not limited by the embodiments of the present disclosure.

The respective functional units in the communication system 100 may also establish a connection between each other through a next generation network (NG) interface to achieve communication.

For example, the terminal device establishes an air interface connection with the access network device through the NR interface for transmitting user plane data and control plane signaling. The terminal device can establish a control plane signaling connection with the AMF through the NG interface 1 (N1 for short). An access network device, such as a next generation radio access base station (gNB), can establish a user plane data connection with the UPF through an NG interface 3 (N3 for short). The access network device can establish a control plane signaling connection with the AMF through the NG interface 2 (N2 for short); The UPF can establish a control plane signaling connection with the SMF through the NG interface 4 (referred to as N4 for short). The UPF can interact user plane data with the data network through the NG interface 6 (N6 for short). The AMF may establish a control plane signaling connection with the SMF through the NG interface 11 (N11 for short). The SMF may establish a control plane signaling connection with the PCF through the NG interface 7 (referred to as N7 for short).

FIG. 1 exemplarily illustrates one base station, one core network device, and two terminal devices. Alternatively, the wireless communication system 100 may include a plurality of base station devices, another number of terminal devices may be included within the coverage range of each base station, and the embodiment of the present disclosure is not limited thereto.

It should be noted that FIG. 1 only illustrates a system applicable to the present disclosure in the form of an example, and of course, the method shown in the embodiment of the present disclosure can also be applied to other systems. Further, the terms "system" and "network" are often used interchangeably herein. Herein, the term "and/or" is only an association relationship describing an association object, and means that there may be three relationships, for example, A and/or B, which may mean that A alone exists, A and B exist simultaneously, and B alone exists. In addition, the character "/" in this article generally indicates that the related objects before and after are in an "or" relationship. It should also be understood that the "indication" mentioned in the embodiments of the present disclosure may be a direct indication, an indirect indication, or an association relationship. For example, A indicates B, which may mean that A directly indicates B, for example, B can be acquired by A; It may also mean that A indicates B indirectly, for example A indicates C, and B can be acquired through C; It may also indicate that there is an association relationship between A and B. It should also be understood that "correspondence" mentioned in the embodiments of the present disclosure may indicate that there is a direct correspondence or indirect correspondence between the two elements, may indicate that there is a correlation relationship between the two elements, or may indicate a relationship between indicating and being indicated, configuring and being configured, or the like. It should also be understood that the "predefined" or "predefined rules" mentioned in the embodiments of the present disclosure may be implemented by storing corresponding codes, tables, or other methods that can be used to indicate relevant information in advance in devices (e.g., including terminal devices and network devices), and the present disclosure does not limit specific implementations thereof. For example, "predefined" may refer to being defined in the protocol. It should also be understood that in the embodiment of the present disclosure, the "protocol" may refer to a standard protocol in the field of communication, and may include, for example, an LTE protocol, an NR protocol, and related protocols applied in future communication systems, and the present disclosure is not limited thereto.

In order to facilitate understanding of the technical solutions of the embodiments of the present disclosure, the related technologies of the embodiments of the present disclosure will be described below, and the related technologies below can be arbitrarily combined with the technical solutions of the embodiments of the present disclosure as options, and all of them belong to the scope of protection of the embodiments of the present disclosure.


1. Downlink CSI feedback

In order for the network device to perform reasonable scheduling, the terminal device needs to feed back the downlink CSI, so that the network device can determine the scheduling information of the terminal device, such as the number of transmission layers, the precoding matrix, the transmission beam, and the modulation and coding scheme. The terminal device feeds back the downlink CSI, which can also be understood as the terminal device performing the CSI reporting. Specifically, the terminal device performs CSI reporting based on the CSI report configuration indicated by the network device, and the uplink resource used by the terminal device for performing the CSI reporting and the downlink reference signal used for performing CSI measurement are both indicated by the CSI report configuration. Each CSI report configuration corresponds to one CSI report, and each CSI report may include information such as a CSI-RS Resource Indicator (CRI), a Rank Indicator (RI), a Precoding Matrix Indicator (PMI), a Channel Quality Indicator (CQI), a Layer Indicator (LI), and a Reference Signal Receiving Power (RSRP). What information is included in the CSI report is indicated by the information reportQuantity in the CSI report configuration. For example, table 1 in the below gives the reportQuantity that can be indicated by the information reportQuantity. Taking the reportQuantity being "CRI-RI-PMI-CQI" as an example, it means that the CSI report needs to include information such as CRI, RI, PMI, and CQI.


## Table 1

```
reportQuantity                      CHOICE {
      none                          NULL,
      cri-RI-PMI-CQI                  NULL,
      cri-RI-i1                     NULL,
      cri-RI-i1-CQI                 SEQUENCE {
          pdsch-BundleSizeForCSI                                        ENUMERATED   {n2,   n4}
OPTIONAL    -- Need S
          },
      cri-RI-CQI                    NULL,
      cri-RSRP                      NULL,
      ssb-Index-RSRP                 NULL,
      cri-RI-LI-PMI-CQI               NULL
    }
```

The CRI is used to determine a CSI-RS resource currently used for channel measurement and an Interference Measurement Resource (IMR) currently used for interference measurement from a plurality of Channel State Information-Reference Signal (CSI-RS) resources. RI is used to report the recommended number of transmission layers. The PMI is used to determine a recommended precoding matrix from a predefined codebook. CQI is used to report the current channel quality, and can be determined based on the Signal to Interference plus Noise Ratio (SINR) estimated by the terminal device. Herein, the channel portion in the SINR is determined based on a non-zero power CSI-RS configured by the network device for channel measurement, and the interference portion is determined based on a Channel State Information-Interference Measurement Resource (CSI-IM) or a non-zero power CSI-RS configured by the network device for interference measurement; The CQI is calculated based on reported RI and PMI. The RSRP is used for reporting the RSRP of the CSI-RS or SSB corresponding to the fed-back index, and thus is used for the network device to determine the beam used for downlink transmission. The LI is used to report the index of the transmission layer associated with the PTRS.

The CSI reporting of the terminal device can have the following three reporting manners: periodic CSI reporting, semi-persistent CSI reporting and aperiodic CSI reporting. As shown in FIG. 2, for periodic CSI reporting, the CSI report is transmitted on a Physical Uplink Control Channel (PUCCH), and the CSI report configuration is configured by RRC signaling. After receiving the RRC signaling for configuring the CSI report configuration, the terminal device periodically performs CSI reporting. For semi-persistent CSI reporting, the CSI report may be transmitted on PUCCH or PUSCH; The CSI report configuration corresponding to the CSI report transmitted on the PUCCH is pre-configured by RRC signaling and activated or deactivated by Media Access Control (MAC) layer signaling (e.g., MAC CE); The CSI report configuration corresponding to the CSI report transmitted on the PUSCH is dynamically indicated (activated or deactivated) through DCI. After receiving the activation signaling configured by the network device, the terminal device periodically reports CSI on the PUCCH or PUSCH until receiving the deactivation signaling, upon which the terminal device stops reporting. The CSI report configuration corresponding to aperiodic CSI reporting is also pre-configured by RRC signaling, and some of the configurations can be activated by MAC layer signaling (such as MAC CE), and then the CSI report configuration used for CSI reporting is indicated by CSI trigger signaling in DCI. After receiving the CSI trigger signaling, the terminal device performs corresponding CSI reporting once on the scheduled PUSCH according to the indicated CSI report configuration.

When the number of bits carried in one CSI is large, in order to prioritize the transmission of important information, one CSI may be divided into two parts, namely CSI part 1 and CSI part 2. Exemplarily, for different types of codebooks, the information contained in CSI part 1 and CSI part 2 is shown in Table 2 below. The number of bits of CSI part 1 is fixed, which is used to carry a small amount of important information such as RI and CQI; The number of bits of the CSI part 2 is determined according to the CSI part 1, and is used to carry information having a large number of bits such as PMI. When the code rate of the PUSCH/PUCCH carrying the CSI exceeds a certain value, the terminal device needs to discard some information in the CSI part 2 to ensure the transmission performance of the PUSCH/PUCCH, that is, the code rate cannot exceed the reference value configured by the network device. Specifically, the information in the CSI part 1 is not discarded, and information having a low priority in the information in the CSI part 2 is discarded first according to the priority reported by the CSI. Among them, the priority of CSI report is determined according to the periodicity of CSI reporting (periodic CSI reporting, semi-persistent CSI reporting, aperiodic CSI reporting), the content of the CSI report (e.g., whether it includes RSRP), the carrier (that is, carrier index) corresponding to the CSI report and the CSI report configuration ID corresponding to the CSI report. If the priority of a CSI report is low and the information in the CSI part 2 needs to be discarded, information corresponding to the odd-numbered sub-band(s) is discarded first, then information corresponding to the even-numbered sub-band(s) is discarded, and finally wideband information is discarded until the code rate meets the requirement.

Table 2

| Codebook Type | CSI Part 1 | CSI Part 2 |
|---|---|---|
| Type I codebook | RI, CRI, CQI (for 1st CW) | PMI, CQI for 2nd CW (RI > 4) |
| Type II codebook | RI, CQI, number of non-zero wideband amplitude coefficients per layer (separately encoded) | PMI |

2. CSI computation delay

As shown in FIG. 2, the network device may trigger semi-persistent or aperiodic CSI reporting through DCI, but sufficient processing time needs to be reserved for the terminal device to perform corresponding CSI measurement and prepare the PUSCH carrying CSI. Since different CSI types require different CSI processing time, in order to ensure that the terminal device has enough time to prepare CSI, the protocol defines different CSI computation delay requirements, which are denoted as Z/Z'.

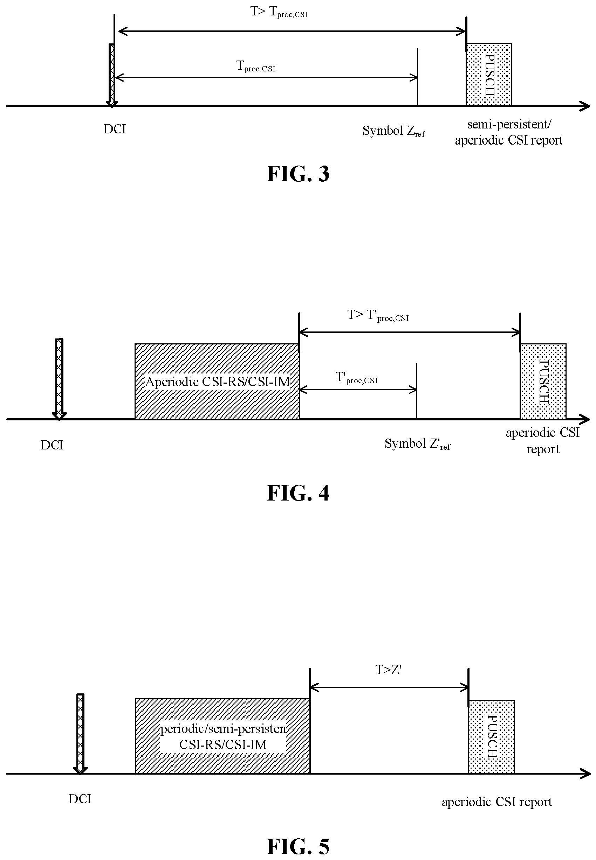

1) For CSI reporting triggered by DCI, the interval T between the last Orthogonal Frequency Division Multiplexing (OFDM) symbol of the Physical Downlink Control Channel (PDCCH) carrying DCI and the first OFDM symbol of the PUSCH carrying CSI must be greater than or equal to $T_{proc, CSI}$ (in OFDM symbols), otherwise the terminal device does not perform the CSI reporting. As shown in FIG. 3, the interval between a symbol $Z_{ref}$ and the last OFDM symbol of the PDCCH carrying DCI is $T_{proc, CSI}$.

If PUSCH merely contains CSI, then $T_{proc,CSI} = (Z)(2048+144) \cdot \kappa 2^{-\mu} \cdot T_c$; If CSI and data/HARQ-ACK are multiplexed in PUSCH, $T_{proc,CSI} = (Z + d) \cdot (2048+144) \cdot \kappa 2^{-\mu} \cdot T_c$, and the values of d are {2, 2, 3, 4} for subcarrier spacings 15/30/60/120 kHz, respectively.

Here, $Z = \max\limits_{m=0,...,M-1}(Z(m))$, M is the number of CSI reports included in the CSI, and $Z(m)$ is a CSI computation delay requirement corresponding to the m-th CSI report among M CSI reports. Z may be referred to as a first CSI processing delay requirement.

Among them, $\mu$ is a subcarrier spacing parameter, and the values of $\mu$ are {0, 1, 2, 3} for the subcarrier spacings of 15/30/60/120 kHz, respectively.

Where $\kappa = T_s/T_c$, $T_s$ and $T_c$ are different time units with fixed values.

If the CSI computation delay requirement cannot be satisfied (i.e., $T < T_{proc,CSI}$), and the semi-persistent or aperiodic CSI report is not multiplexed with HARQ-ACK/data, the terminal device ignores the DCI and does not send the PUSCH, that is, the terminal device does not perform the CSI reporting (i.e., does not perform semi-persistent or aperiodic CSI reporting). If the CSI computation delay requirement cannot be satisfied (i.e., $T < T_{proc,CSI}$), and semi-persistent or aperiodic CSI report is multiplexed with HARQ-ACK/data, the terminal device transmits a PUSCH which only carries HARQ-ACK/data and does not carry CSI.

2) For the aperiodic CSI reporting, if measurement is performed based on the aperiodic CSI-RS/CSI-IM, the interval T between the last OFDM symbol in these CSI-RS/CSI-IM and the first OFDM symbol of the corresponding PUSCH carrying CSI needs to be greater than or equal to $T'_{proc,CSI}$ (in OFDM symbols), otherwise the terminal device does not need to perform corresponding reporting and/or measurement. As shown in FIG. 4, the interval between a symbol $Z'_{ref}$ and the last OFDM symbol of the CSI-RS/CSI-IM is $T'_{proc, CSI}$. Here, CSI-RS/CSI-IM resources belong to CSI measurement resources, CSI-RS resources are used for channel measurement, and CSI-IM resources are used for interference measurement.

$$T'_{proc,CSI} = (Z')(2048+144) \cdot \kappa 2^{-\mu} \cdot T_c$$

Where $Z' = \max\limits_{m=0,...,M-1}(Z'(m))$, M is the number of CSI reports included in the CSI, and $Z'(m)$ is a CSI computation delay requirement corresponding to an m-th CSI report among M CSI reports. $Z'$ may be referred to as a second CSI computation delay requirement.

If the CSI computation delay requirement cannot be satisfied (i.e., $T < T'_{proc,CSI}$), and the DCI triggers only one CSI reporting, and the CSI report is not multiplexed with HARQ-ACK/data, the terminal device ignores the DCI and does not send PUSCH, that is, the terminal device does not perform the CSI reporting. In other cases, the terminal device does not need to update the CSI report that does not meet the CSI computation delay requirement (but still performs the CSI reporting).

3) For the aperiodic CSI reporting, if measurement is performed based on periodic or semi-persistent CSI-RS/CSI-IM, the interval T between the last OFDM symbol in these CSI-RS/CSI-IM and the first OFDM symbol of the corresponding PUSCH carrying CSI needs to be greater than or equal to Z'(in OFDM symbols), otherwise the terminal device does not need to perform measurement, as shown in FIG. 5.

Where Z' may be referred to as a second CSI processing delay requirement.

If the CSI computation delay requirement cannot be satisfied (i.e., T < Z'), the terminal device still needs to perform the CSI reporting, but does not need to update the CSI report.

In the above scheme, $\mu$, Z/ Z' can be determined according to the following method:

a) $\mu = \min(\mu_{PDCCH}, \mu_{CSI-RS}, \mu_{UL})$

Where $\mu_{PDCCH}$ represents a subcarrier spacing of a PDCCH in which a DCI used to trigger the CSI reporting is located; $\mu_{UL}$ represents a subcarrier spacing used to carry a PUSCH for CSI reporting; $\mu_{CSI-RS}$ represents a smallest subcarrier spacing in the aperiodic CSI-RS triggered by the DCI used to trigger the CSI reporting.

b) The value of Z/Z' can be determined with reference to Tables 3 and 4 below. Table 3 shows the values of Z1/Z1' at different subcarrier spacings, corresponding to CSI computation delay requirement 1 (CSI computation delay requirement 1). Table 4 shows the values of Z1/Z1', Z2/Z2' and Z3/Z3 'at different subcarrier spacings, corresponding to the CSI computation delay requirement 2 (CSI computation delay requirement 2), where X is the capability beam report time (beamReportTiming) reported by the terminal device, KB is the capability beam switching time (beamSwitchTiming) reported by the terminal device.

Table 3

| $\mu$ | $Z_1$ [Symbols] | |
|---|---|---|
| | $Z_1$ | $Z_1$' |
| 0 | 10 | 8 |
| 1 | 13 | 11 |
| 2 | 25 | 21 |
| 3 | 43 | 36 |

Table 4

| $\mu$ | $Z_1$ [Symbols] | | $Z_2$ [Symbols] | | $Z_3$ [Symbols] | |
|---|---|---|---|---|---|---|
| | $Z_1$ | $Z_1$' | $Z_2$ | $Z_2$' | $Z_3$ | $Z_3$' |
| 0 | 22 | 16 | 40 | 37 | 22 | $X_0$ |
| 1 | 33 | 30 | 72 | 69 | 33 | $X_1$ |
| 2 | 44 | 42 | 141 | 140 | $\min(44, X_2 + KB_1)$ | $X_2$ |
| 3 | 97 | 85 | 152 | 140 | $\min(97, X_3 + KB_2)$ | $X_3$ |

The values of Z/Z' given in Tables 3 and 4 above are used according to the following rules:

The values of Z/Z' corresponding to Fast CSI (Fast CSI) reports are the values of $Z_1/Z_1$' in Table 3. Among them, the Fast CSI reports must meet all the following conditions:

the CSI report is an aperiodic CSI report, and is not multiplexed with other information, and the current CPU is not occupied;
the CSI report is a single broadband CSI report, and the CSI report corresponds to a single CSI-RS resource (up to 4 ports, no CRI); and,
the RRC parameter configuration corresponding to the CSI report is as follows: codebookType = 'typeI-SinglePanel', reportQuantity = 'cri-RI-CQI'.

The values of Z/Z' corresponding to the Sub-fast CSI (Sub-fast CSI) report is the values of $Z_1/Z_1$' in Table 4, where the Sub-fast CSI report must meet all the following conditions:

the CSI report is a single broadband CSI report, and the CSI report corresponds to a single CSI-RS resource (up to 4 ports, no CRI); and,
the RRC parameter configuration corresponding to CSI report is: codebookType = 'typeI-SinglePanel', reportQuantity = 'cri-RI-CQI'.

The values of Z/Z' corresponding to the CSI report for beam report are the values of $Z_3/Z_3$' in Table 3, wherein the CSI report for the beam report needs to satisfy all the following conditions:
the RRC parameter configuration corresponding to the CSI report is: reportQuantity = 'cri-RSRP' or 'ssb-Index-RSRP'.

In addition to the above-described fast CSI report, sub-fast CSI report, and CSI report for beam report, the value of Z/Z' corresponding to the other CSI report is the value of $Z_2/Z_2$' in Table 3.

3. Neural network for CSI

1) Neuronal structure

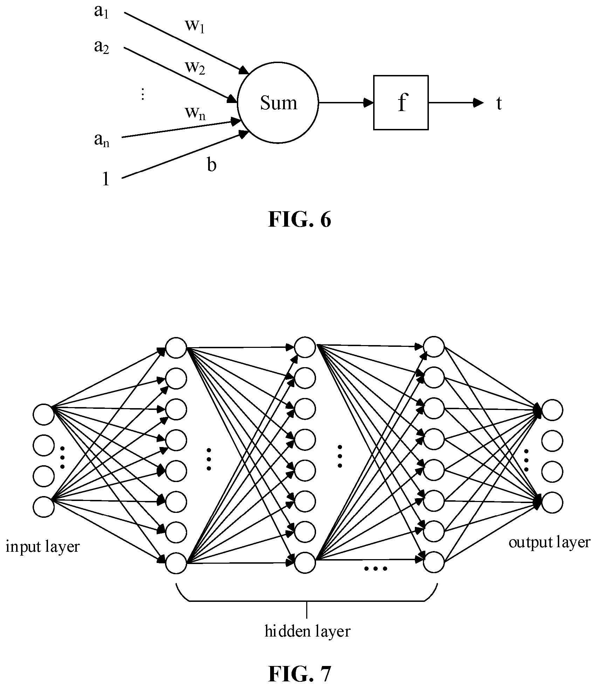

Neural network is a computation model composed of multiple neuron nodes connected to each other, in which the connections between nodes represent the weighted values from the input signals to the output signals, which are called weights. Each node performs a weighted summation of different input signals and outputs them through a specific activation function. The structure of the neuron is shown in Figure 6, where $a_1, a_2, ..., a_n$ and 1 are the inputs of the neuron, $w_1, w_2, ..., w_n$ and b represent the weights, Sum represents the summation function, f represents the activation function, and t is the output result.

2) Neural network

Figure 7 shows a simple neural network. The neural network includes an input layer, a hidden layer and an output layer. Through different connection methods of multiple neurons, combined with different weights and activation functions, different outputs can be generated, and then the mapping relationship from input to output can be fitted. Exemplarily, each upper-level node may be connected to all of its lower-level nodes, forming a fully connected model. This fully connected model may also be referred to as a Deep Neural Network (DNN).

5. Obtaining the model

A neural network model can be trained through the process of data set construction, training, verification and testing. In the embodiment of the present disclosure, it is assumed that the neural network model has been trained in advance by offline training or online training. It should be noted that offline training and online training are not mutually exclusive. For example, the network can first obtain a static training result through offline training of the data set, which can be called offline training. During the use of the neural network model by the network or the terminal device, with further measurement and/or reporting by the terminal device, the neural network model can continue to collect more data and perform real-time online training to optimize the parameters of the neural network model, thereby achieving better inference and prediction results.

6. Artificial Intelligence (AI)/Machine Learning (ML)-based CSI report

After the neural network model is obtained, the corresponding model output can be inferred by inputting information obtained by CSI measurement into the neural network model. For example, on the terminal device side, channel information (such as feature vectors, beam information, delay information, etc.) obtained by CSI measurement is used as input of the neural network model, so as to infer corresponding CSI quantized bits, which is called AI/ML-based CSI. On the network device side, there is a neural network model corresponding to that on the terminal device side. By taking the CSI quantized bits from the terminal device as the input of the neural network model, the corresponding channel information can be inferred.

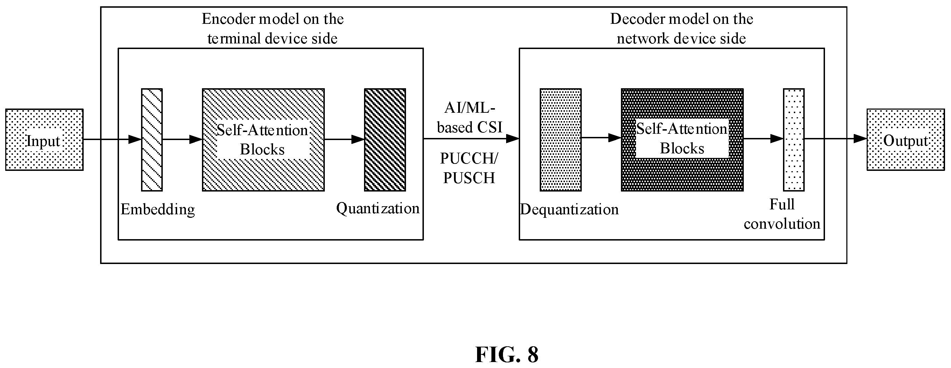

Figure 8 shows a typical neural network model for CSI feedback (or for CSI report). A neural network model (simply referred to as an encoder model) for an encoder is deployed on the terminal device side, and a corresponding neural network model (simply referred to as a decoder model) for a decoder is deployed on the network side. The terminal device outputs CSI quantized bits (e.g., PMI bits) based on the encoder model, and then feeds them back to the network device through the uplink channel (e.g., PUSCH/PUCCH). The network device takes the CSI quantized bits fed back by the terminal device as the input of the decoder model, thereby outputting channel information (e.g., feature vectors, beam information, delay information, etc.) corresponding to the input from the terminal device side for downlink precoding. In addition, the terminal device can also monitor the performance of the encoder model, update the encoder model when the performance of the encoder model is not good, and report the updat synchronously updating the model.

In an embodiment of the present disclosure, CSI reporting may be implemented based on an AI/ML model, and is referred to as CSI reporting based on an AI/ML model or AI/ML-based CSI reporting. At present, design of the CSI computation delay requirement does not consider the processing complexity and computation delay required by AI/ML-based CSI report model. Moreover, inference based on different AI/ML models has different complexity and needs different processing time. If a fixed CSI computation delay requirement is adopted, it is difficult to support flexible switching between AI/ML models. Therefore, the following technical solutions according to the embodiments of the present disclosure are proposed.

In order to facilitate understanding of the technical solutions of the embodiments of the present disclosure, the technical solutions of the present disclosure will be described in detail below with reference to specific examples. As optional solutions, the above related technologies can be arbitrarily combined with the technical solutions of the embodiments of the present disclosure, and all of them belong to the scope of protection of the embodiments of the present disclosure. Embodiments of the present disclosure include at least some of the following.

The "model" described in the embodiment of the present disclosure may be referred to as a neural network model or an AI/ML model, and the AI/ML model may be described as an AI model or an ML model.

The "model" described in the embodiment of the present disclosure refers to a model on the terminal device side. The input information of the model on the terminal device side is channel information obtained by the terminal device performing CSI measurement, and for example, the channel information may include a feature vector, a channel covariance matrix, beam information, delay information, and the like. The output information of the model on the terminal device side is CSI quantized bits (or referred to as CSI feedback bits), and for example, the CSI quantized bits may include RI bits, CRI bits, CQI bits, PMI bits, and the like. The output information of the model on the terminal device side may be referred to as AI/ML-based CSI, and the terminal device may perform the AI/ML-based CSI reporting through the PUSCH.

It should be noted that the "CSI reporting" described in the embodiment of the present disclosure is AI/ML-based CSI reporting, and the CSI reporting is triggered by DCI, and may be semi-persistent CSI reporting or aperiodic CSI reporting, referring to FIG. 2. In some embodiments, the AI/ML-based CSI report is a CSI report obtained by AI/ML-based CSI compression and/or a CSI report obtained by AI/ML-based CSI prediction. Here, CSI compression refers to compressing measured channel information into CSI quantized bits. ed encoder model to the network device, so that the network device can synchronously update the decoder model. Here, since the neural network models on the terminal device side and the network device side match with each other, if the model is to be updated, it is necessary to notify each other through signaling to achieve the purpose of

Here, CSI prediction refers to predicting subsequent channel information by using previously measured channel information. That is, the model on the terminal device side may implement CSI compression and/or CSI prediction. In some embodiments, the AI/ML-based CSI report includes at least an AI/ML-based PMI, which may be understood as indication information for obtaining a precoding matrix, and may optionally include an AI/ML-based CQI and/or an AI/ML-based RI.

Here, the AI/ML-based CSI report can also be referred to as a CSI report based on neural network inference, a CSI report based on compressed CSI based on two-sides model, or a CSI report based on AI training, which is different from a traditional CSI report (that is, a CSI report not based on AI/ML), which is a CSI report based on codebook or channel reciprocity.

It is to be noted that the "CSI reporting" described in the embodiments of the present disclosure may also be described as "CSI report" or "CSI" in some cases, that is, CSI reporting, CSI report, and CSI may be exchanged with each other.

The "CSI measurement resource" described in the embodiment of the present disclosure is used for the terminal device to perform CSI measurement. In some embodiments, the CSI measurement resource includes a CSI-RS/CSI-IM resource, where the CSI-RS resource is used for channel measurement and the CSI-IM resource is used for interference measurement.

It is to be noted that the "CSI computation delay" described in the embodiment of the present disclosure may also be described as "CSI computation time".

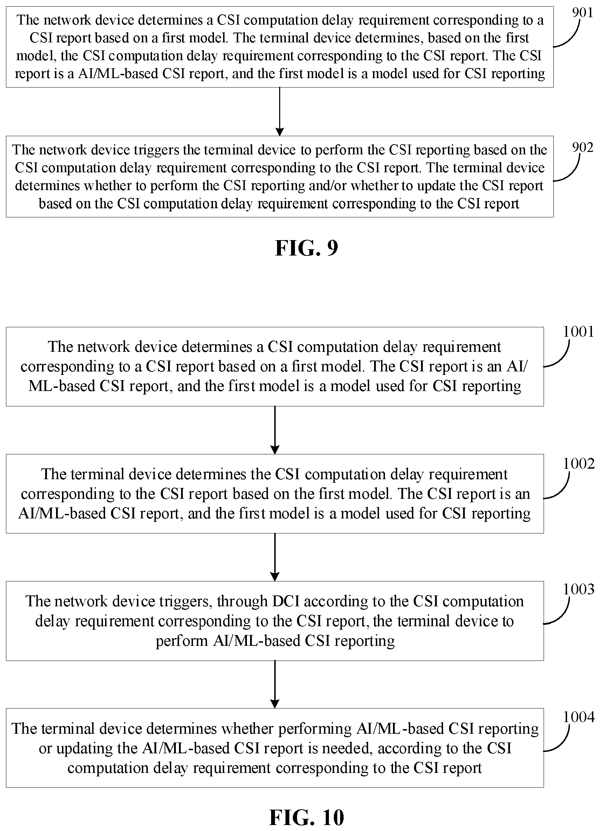

FIG. 9 is a first flowchart of a method for determining a computation delay requirement according to an embodiment of the present disclosure, and as shown in FIG. 9, the method includes all or part of the following contents.

In operation 901, the network device determines a CSI computation delay requirement corresponding to a CSI report based on a first model. The terminal device determines, based on the first model, the CSI computation delay requirement corresponding to the CSI report. The CSI report is an AI/ML-based CSI report, and the first model is a model used for CSI reporting.

In some embodiments, the network device determines the CSI computation delay requirement corresponding to the CSI report based on the first model, which may be implemented in the following manner: the network device determines the CSI computation delay requirement corresponding to the CSI report based on the model information of the first model and a first correspondence relationship, and the first correspondence relationship is a correspondence relationship between the model information and the CSI computation delay requirement.

In some embodiments, the network device receives indication information transmitted by the terminal device, and the indication information is used to indicate model information of the first model.

In some embodiments, the terminal device may determine the CSI computation delay requirement corresponding to the CSI report based on the first model in the following manner: the terminal device may determine the CSI computation delay requirement corresponding to the CSI report based on the model information of the first model and the first correspondence relationship, and the first correspondence relationship is a correspondence relationship between the model information and the CSI computation delay requirement.

In some embodiments, the model information of the first model may be indicated to the terminal device by the network device.

In some embodiments, the model information includes at least one of an identification of the model, functionality of the model, a model group to which the model belongs, a CSI measurement resource used to obtain input information of the model (or a CSI measurement resource set to which the CSI measurement resource belongs), a number of output bits of the model, a maximum number of output bits of the model, and an output content of the model.

Exemplarily, the model information includes an identification of the model, and the first correspondence relationship is a correspondence relationship between the identification of the model (simply referred to as a model identification or a model ID) and the CSI computation delay requirement. The network device determines the CSI computation delay requirement corresponding to the CSI report based on the identification of the first model used for CSI reporting and the correspondence relationship between the identification of the model (referred to as the model identification for short) and the CSI computation delay requirement. Here, the correspondence relationship between the identification of the model and the CSI computation delay requirement can also be understood as the correspondence relationship between the model and the CSI computation delay requirement. Different model identifiers may have correspondence relationships with different CSI computation delay requirements.

Exemplarily, the model information includes functionality of the model, and the first correspondence relationship is a correspondence relationship between the functionality of the model and the CSI computation delay requirement. The network device determines the CSI computation delay requirement corresponding to the CSI report based on the functionality of the first model used for CSI reporting and the correspondence relationship between the functionality of the model and the CSI computation delay requirement. Here, the functionality of the model is the functionality realized by the AI/ML model, such as PMI reporting, RI/PMI/CQI reporting, beam information reporting, RSRP reporting, CSI compression, CSI prediction, CSI prediction and compression, and etc. Models that implement different functionalities require different complexity, and the corresponding CSI computation delay requirements are also different.

Exemplarily, the model information includes a model group to which the model belongs, and the first correspondence relationship is a correspondence relationship between the model group and the CSI computation delay requirement. The network device determines the CSI computation delay requirement corresponding to the CSI report based on the model group to which the first model used for CSI reporting belongs and the correspondence relationship between the model group and the CSI computation delay requirement. Different model groups may have correspondence relationships with different CSI computation delay requirements.

Exemplarily, the model information includes a CSI measurement resource (or a CSI measurement resource set to which the CSI measurement resource belongs) used to obtain input information of the model, and the first correspondence relationship is a correspondence relationship between the CSI measurement resource (or the CSI measurement resource set) and the CSI computation delay requirement. The network device determines the CSI computation delay requirement corresponding to the CSI report based on the CSI measurement resource (or the CSI measurement resource set to which the CSI measurement resource belongs) for the input information of the first model used for CSI reporting and the correspondence relationship between the CSI measurement resource (or the CSI measurement resource set) and the CSI computation delay requirement. Different CSI measurement resources (or CSI measurement resource sets) may have correspondence relationships with different CSI computation delay requirements.

Exemplarily, the model information includes a number of output bits of the model, and the first correspondence relationship is a correspondence relationship between the number of output bits and the CSI computation delay requirement. The network device determines the CSI computation delay requirement corresponding to the CSI report based on the number of output bits of the first model used for CSI reporting and the correspondence relationship between the number of output bits and the CSI computation delay requirement. Different numbers of output bits may have correspondence relationships with different CSI computation delay requirements. For example, when the number of output bits of the model is within a first range, the CSI computation delay requirement corresponds to a value; when the number of output bits of the model is within a second range, the CSI computation delay requirement corresponds to another value, where the first range and the second range are different. If the number of output bits of the model is variable, i.e. the model supports a plurality of different number of output bits, then the number of output bits of the model is the maximum number of output bits supported by the model.

Exemplarily, the model information includes output content of the model, the first correspondence relationship is a correspondence relationship between the output content and the CSI computation delay requirement, and the output content may include PMI, CQI, RI, RSRP, and the like. The network device determines the CSI computation delay requirement corresponding to the CSI report based on the output content of the first model used for CSI reporting and the correspondence relationship between the output content and the CSI computation delay requirement. Different output contents may have correspondence relationships with different CSI computation delay requirements. For example, when the model outputs PMI bits, the output content corresponds to a large CSI computation delay requirement; when the model outputs RSRP, the output content corresponds to a small CSI computation delay requirement. For example, when the model outputs predicted PMI bits, the output content corresponds to a large CSI computation delay requirement; when the model outputs compressed PMI bits, the output content corresponds to a small CSI computation delay requirement.

In some embodiments, the division of the model group is related to at least one of the following: model level, model complexity, or model resolution. In some embodiments, the division of the model group is performed by the terminal device, and is reported by the terminal device to the network device. Alternatively, the division of the model group is performed by the network device, and is configured by the network device to the terminal device.

Here, different model groups may correspond to different model levels, different model complexity, and different model resolutions. That is, the network device or the terminal device may group the models according to the model level, the model complexity, or the model resolution, and different model groups correspond to different CSI computation delay requirements. The division of the model group may be performed by the terminal device and reported to the network device, or may be performed by the network device and configured to the terminal device.

Exemplarily, the division of model groups may be performed according to model IDs, e.g., model group 1 contains models with model IDs 2, 4, 5, and model group 2 contains models with model IDs 1, 3. Model group 1 and model group 2 correspond to different CSI computation delay requirements.

In some embodiments, the first correspondence relationship is configured by the network device to the terminal device. Alternatively, the first correspondence relationship is reported by the terminal device to the network device.

Alternatively, the first correspondence relationship is agreed upon in a protocol.

Exemplarily, the network device determines the first correspondence relationship and configures the first correspondence relationship to the terminal device.

Exemplarily, the terminal device determines the first correspondence relationship and reports the first correspondence relationship to the network device.

Exemplarily, the first correspondence relationship is agreed upon in a protocol, and the network device and the terminal device obtain the first correspondence relationship according to agreement in the protocol.

As an implementation, the first correspondence relationship is reported by the terminal device to the network device in the following manners.

1) The first correspondence relationship is reported by the terminal device to the network device through UE capability information, and the UE capability information includes model information supported by the terminal device and a CSI computation delay requirement corresponding to each supported model information.

Here, the terminal device transmits UE capability information to the network device, the network device receives the UE capability information transmitted by the terminal device, and the UE capability information includes model information supported by the terminal device and a CSI computation delay requirement corresponding to each supported model information.

Exemplarily, the UE capability information includes a model supported by the terminal device (for example, a model ID, model functionality, etc.) and a CSI computation delay requirement corresponding to each supported model.

2) The first correspondence relationship is reported by the terminal device to the network device through the model indication information, and the model indication information indicates the model information and the CSI computation delay requirement corresponding to the model information.

Here, the terminal device transmits model indication information to the network device, and the network device receives the model indication information transmitted by the terminal device, and the model indication information indicates model information related to a model used by the terminal device and a CSI computation delay requirement corresponding to the model information.

In one scenario, if the terminal device finds that the performance of the current model is poor through model monitoring, the terminal device may indicate the recommended model to the network device through the model indication information, and at the same time, indicate the CSI computation delay requirement corresponding to the recommended model to the network device through the model indication information.

Exemplarily, the model indication information indicates a model used by the terminal device and a CSI computation delay requirement corresponding to the model.

In some embodiments, the CSI processing delay requirement includes a first delay requirement and/or a second delay requirement. The first delay requirement is used for determining a first requirement that an interval between the first OFDM symbol and the second OFDM symbol needs to meet. The second delay requirement is used for determining a second requirement that an interval between a third OFDM symbol and the second OFDM symbol needs to meet. Herein, the first OFDM symbol is a last OFDM symbol of the PDCCH carrying DCI, and the DCI is used to trigger target CSI reporting. The second OFDM symbol is a first OFDM symbol of the PUSCH carrying the target CSI report. The third OFDM symbol is a last OFDM symbol on a CSI measurement resource corresponding to the target CSI report.

Here, the first delay request may be referred to as Z, and the second delay request may be referred to as Z'. The first requirement may be denoted as $T_{proc,CSI}$, the second requirement may be denoted as $T'_{proc,CSI}$, or the second requirement may be the second delay requirement. In some embodiments, the relationship between $T_{proc,CSI}$ and Z, and the relationship between $T'_{proc,CSI}$ and Z' can refer to the foregoing description related to "CSI computation delay", specifically, if the PUSCH merely contains CSI, then $T_{proc,CSI} = (Z)(2048+144) \cdot \kappa 2^{-\mu} \cdot T_c$; if CSI and data/HARQ-ACK are multiplexed in the PUSCH, $T_{proc,CSI} = (Z + d) \cdot (2048+144) \cdot \kappa 2^{-\mu} \cdot T_c$, and the values of d are {2, 2, 3, 4} for subcarrier spacings 15/30/60/120 kHz, respectively. $T'_{proc,CSI} = (Z')(2048+144) \cdot \kappa 2^{-\mu} \cdot T_c$.

In some embodiments, the interval between the first OFDM symbol and the second OFDM symbol needs to be greater than or equal to $T_{proc,CSI}$ (in OFDM symbols), otherwise the terminal device does not perform the CSI reporting.

In some embodiments, when the CSI measurement resource is an aperiodic CSI-RS/CSI-IM resource, the interval between the third OFDM symbol and the second OFDM symbol needs to be equal to or greater than $T'_{proc,CSI}$ (in OFDM symbols), otherwise the terminal device does not perform CSI measurement and/or CSI reporting.

In some embodiments, when the CSI measurement resource is a periodic or semi-persistent CSI-RS/CSI-IM resource, the interval between the third OFDM symbol and the second OFDM symbol needs to be greater than or equal to Z'(in OFDM symbols), otherwise the terminal device does not perform CSI measurement.

In some embodiments, if the PUSCH carrying the target CSI report includes a plurality of CSI reports to be updated, the first requirement and the second requirement may be determined based on the maximum value of the CSI computation delay requirements corresponding to the plurality of CSI reports, that is, $Z = \max\limits_{m=0,...,M-1}(Z(m))$,

$$Z' = \max_{m=0,...,M-1}(Z'(m))$$, M represents the number of the plurality of CSI reports (that is, the number of CSI reports to be updated included in the PUSCH), and Z(m) represents the CSI computation delay requirement corresponding to the CSI report have an index m or the m-th CSI report in M CSI reports. The method for the plurality of CSI reports to determine the CSI computation delay requirement may be different. For example, assuming that the PUSCH carries three CSI reports that need to be updated, namely, AI/ML-based CSI report 1 and AI/ML-based CSI report 2, and legacy codebook (non-AI/ML)-based CSI report 3, and these CSI reports are measured based on aperiodic CSI-RS/CSI-IM. Then the terminal device may determine the corresponding CSI computation delay requirement 1 (corresponding to Z) and CSI computation delay requirement 2 (corresponding to Z') according to the model 1 used by CSI report 1; determine the corresponding CSI computation delay requirement 3 (corresponding to Z) and CSI computation delay requirement 4 (corresponding to Z') according to the model 2 used by CSI report 2; determine the corresponding CSI computation delay requirement 5 (corresponding to Z) and CSI computation delay requirement 6 (corresponding to Z') according to the content reported by the CSI report 3 and the CSI computation delay requirement defined in the existing protocol. At this time, the first requirement that the interval between the first OFDM symbol and the second OFDM symbol needs to meet may be determined according to the maximum value of the computation delay requirement 1, the CSI computation delay requirement 3, and the CSI computation delay requirement 5. The second requirement that the interval between the third OFDM symbol and the second OFDM symbol needs to meet may be determined according to the maximum value of the computation delay requirement 2, the CSI computation delay requirement 4, and the CSI computation delay requirement 6.

In some embodiments, the CSI computation delay requirement may be represented in the following ways:

1) First representation way: in the first correspondence relationship, the CSI computation delay requirement is represented by the value of the CSI computation delay requirement, or by the level corresponding to the CSI computation delay requirement. Herein, the values of CSI computation delay requirement corresponding to different levels are configured by the network device or agreed upon in a protocol.

Here, the CSI computation delay requirement in the first correspondence relationship may be directly a value of the CSI computation delay requirement, such as the value of Z/Z', or may be a level corresponding to the CSI computation delay requirement (which may be referred to as a delay requirement level).

Exemplarily, the network device and the terminal device pre-agree on values of CSI computation delay requirements corresponding to different levels. When the terminal device reports the first correspondence relationship, the CSI computation delay requirement in the first correspondence relationship is indicated by the delay requirement level, and the network device can determine the value of the corresponding CSI computation delay requirement according to the delay requirement level. Referring to table 5 below, the network device and the terminal device may pre-agree the values of Z/Z' corresponding to three delay requirement levels, and the values of Z/Z' are also related to the subcarrier spacings. When the terminal device reports the first correspondence relationship, one of the delay requirement levels 1, 2, and 3 represents one CSI computation delay requirement in the first correspondence relationship, and the network device may determine the corresponding value of Z/Z' according to the delay requirement level. In the definition of the subcarrier spacing can refer to the above description.

Table 5

| Delay requirement levels | Subcarrier spacings $\mu$ | Z(symbols) | Z'(symbols) |
|---|---|---|---|
| 1 | 0 | 10 | 8 |
| | 1 | 13 | 11 |
| | 2 | 25 | 21 |
| | 3 | 43 | 36 |
| 2 | 0 | 16 | 14 |
| | 1 | 20 | 17 |
| | 2 | 32 | 27 |
| | 3 | 50 | 42 |

(continued)

| Delay requirement levels | Subcarrier spacings $\mu$ | Z(symbols) | Z'(symbols) |
|---|---|---|---|
| 3 | 0 | 20 | 16 |
| | 1 | 25 | 20 |
| | 2 | 40 | 32 |
| | 3 | 60 | 50 |

2) A second representation way: in the first correspondence relationship, the CSI computation delay requirement is represented by a value of a first offset, or by a level corresponding to the first offset, the first offset is an offset of the CSI computation delay requirement relative to the reference CSI computation delay requirement, and the reference CSI computation delay requirement is configured by a network device, or is agreed upon in a protocol, or is preset. Herein, the values of the first offset corresponding to the different levels are configured by the network device or agreed upon in a protocol.

Here, the CSI computation delay requirement is equal to the reference CSI computation delay requirement plus a first offset (or referred to as a first offset value). The CSI computation delay requirement in the first correspondence relationship may be represented by a value of the first offset or a level corresponding to the first offset (which may be referred to as a delay requirement level), and the network device may determine the value of the first offset according to the level corresponding to the first offset, and thereby determine the value of the CSI computation delay requirement according to the value of the first offset and the value of the reference CSI computation delay requirement.

As an implementation, the value of the reference CSI computation delay requirement may be the value of Z/Z' specified in the 5G protocol, and for convenience of distinction, the reference CSI computation delay requirement is referred to as $Z_l/Z_l'$, the reference CSI computation delay requirement is a CSI computation delay requirement for a traditional CSI report, and the CSI computation delay requirement in the embodiment of the present disclosure is a CSI computation delay requirement for AI/ML-based CSI report.

Exemplarily, a first delay requirement among the CSI computation delay requirements is $Z = Z_l + r$, r being a portion of the first offset corresponding to Z; In the CSI computation delay requirements, the second delay requirement among the CSI computation delay requirements is $Z' = Z_l' + r'$, and r' is a portion of the first offset corresponding to Z'.

For example, the network device and the terminal device pre-agree on the values of the first offset corresponding to different levels. When the terminal device reports the first correspondence relationship, the CSI computation delay requirement in the first correspondence relationship is indicated by the level of the first offset, and the network device may determine the value of the first offset according to the level corresponding to the first offset, and further determine the value of the CSI computation delay requirement according to the value of the first offset and the value of the reference CSI computation delay requirement. Referring to table 6 below, the network device and the terminal device may pre-agree values of r/r 'corresponding to three delay requirement levels, and the values of r/r' are also related to subcarrier spacings. When the terminal device reports the first correspondence relationship, one of the delay requirement levels 1, 2, and 3 represents a value of r/r ', and thereby represents one CSI computation delay requirement in the first correspondence relationship, and the network device can determine the corresponding value of r/r' according to the delay requirement level, and thereby determine the value of Z/Z'. The definition of the subcarrier spacing can refer to the above description.

Table 6

| Delay requirement levels | Subcarrier spacings $\mu$ | r(symbols) | r'(symbols) |
|---|---|---|---|
| 1 | 0 | 3 | 2 |
| | 1 | 5 | 3 |
| | 2 | 8 | 4 |
| | 3 | 10 | 6 |
| 2 | 0 | 5 | 3 |
| | 1 | 8 | 5 |
| | 2 | 12 | 8 |
| | 3 | 15 | 9 |

(continued)

| Delay requirement levels | Subcarrier spacings $\mu$ | r(symbols) | r'(symbols) |
|---|---|---|---|
| 3 | 0 | 8 | 6 |
| | 1 | 10 | 7 |
| | 2 | 15 | 11 |
| | 3 | 22 | 18 |

In operation 902, the network device triggers the terminal device to perform the CSI reporting based on the CSI computation delay requirement corresponding to the CSI report. The terminal device determines whether to perform the CSI reporting and/or whether to update the CSI report based on the CSI computation delay requirement corresponding to the CSI report.

In some embodiments, the operation that the network device triggers the terminal device to perform the CSI reporting based on the CSI computation delay requirement corresponding to the CSI report may be implemented in the following manner: the network device determines, based on the CSI computation delay requirement, a first requirement that the interval between the first OFDM symbol and the second OFDM symbol needs to meet, and/or a second requirement that the interval between the third OFDM symbol and the second OFDM symbol needs to meet. The network device triggers, according to the first requirement and/or the second requirement, the terminal device to perform the CSI reporting through DCI, where the interval between the first OFDM symbol and the second OFDM symbol meets the first requirement, and/or the interval between the third OFDM symbol and the second OFDM symbol meets the second requirement.

Here, the first delay request among the CSI computation delay requests may be referred to as Z, and the first request may be referred to as $T_{proc,CSI}$, and the relationship between $T_{proc,CSI}$ and Z may refer to the above description related to "CSI computation delay". When the interval between the first OFDM symbol and the second OFDM symbol meets the first requirement, it means that the interval between the first OFDM symbol and the second OFDM symbol is equal to or greater than the first requirement.

Here, the second delay request among the CSI computation delay requests may be denoted as Z'; when the CSI measurement resource corresponding to the CSI report is an aperiodic measurement resource, the second requirement may be denoted as $T'_{proc,CSI}$, and the relationship between $T'_{proc,CSI}$ and Z' may refer to the above description related to "CSI computation delay", or the second requirement may be Z'. When the CSI measurement resource corresponding to the CSI report is a periodic or semi-continuous measurement resource, the second requirement is a second delay requirement Z'. When the interval between the third OFDM symbol and the second OFDM symbol meets the second requirement, the interval between the third OFDM symbol and the second OFDM symbol is equal to or greater than the second requirement.

In some embodiments, the operation that the terminal device determines whether to perform the CSI reporting and/or whether to update the CSI report based on the CSI computation delay requirement corresponding to the CSI report may be implemented in the following manner: if the terminal device determines that the CSI computation delay requirement can be met, the terminal device determines to perform the CSI reporting; if the terminal device determines that the CSI computation delay requirement cannot be met, the terminal device determines not to perform the CSI reporting, or not to update the CSI report.

Case 1) The terminal device determines a first requirement that the interval between the first OFDM symbol and the second OFDM symbol needs to meet based on the first delay requirement; if the interval between the first OFDM symbol and the second OFDM symbol is greater than or equal to the first requirement, the terminal device determines to perform the CSI reporting; if the interval between the first OFDM symbol and the second OFDM symbol is less than the first requirement, the terminal device determines not to perform the CSI reporting.

Here, the first delay request may be referred to as Z, and the first request may be referred to as Tproc, CSI, and the relationship between $T_{proc,CSI}$ and Z may refer to the above description related to "CSI computation delay".

Case 2) When the CSI measurement resource corresponding to the CSI report is an aperiodic measurement resource, the terminal device determines a second requirement that the interval between the third OFDM symbol and the second OFDM symbol needs to meet based on the second delay requirement; if the interval between the third OFDM symbol and the second OFDM symbol is greater than or equal to the second requirement, the terminal device determines to perform the CSI reporting; if the interval between the third OFDM symbol and the second OFDM symbol is less than the second requirement, the terminal device determines not to perform the CSI reporting or not to update the CSI report.

Here, the second delay request may be referred to as Z', the second request may be referred to as $T'_{proc,CSI}$, and the relationship between $T'_{proc,CSI}$ and Z' may refer to the above description related to "CSI computation delay".

Case 3) When the CSI measurement resource corresponding to the CSI report is a periodic or semi-continuous measurement resource, if the interval between the third OFDM symbol and the second OFDM symbol is greater than or equal to the second delay requirement, the terminal device determines to perform the CSI reporting; and/or if the interval between the third OFDM symbol and the second OFDM symbol is less than the second delay requirement, the terminal device determines not to update the CSI report.

According to the technical solution of the embodiment of the present disclosure, since online training and inference of different models require different complexity, the terminal device and the network device can determine different CSI computation delay requirements for different models, thereby supporting flexible switching between different models and ensuring the accuracy of CSI feedback on the premise of not exceeding the processing capability of the terminal device.

Hereinafter, the technical solutions of the embodiments of the present disclosure will be described with reference to specific application examples.

Application Example 1

FIG. 10 is a second schematic flowchart of a method for determining a computation delay requirement according to an embodiment of the present disclosure, and as shown in FIG. 10, the method includes all or part of the following contents.

In operation 1001, the network device determines a CSI computation delay requirement corresponding to a CSI report based on a first model. The CSI report is an AI/ML-based CSI report, and the first model is a model used for CSI reporting.

Here, for the manner in which the network device determines the CSI computation delay requirement corresponding to the CSI report based on the first model, the above description with reference to FIG. 9 may be referred to.

In operation 1002, the terminal device determines the CSI computation delay requirement corresponding to the CSI report based on the first model. The CSI report is an AI/ML-based CSI report, and the first model is a model used for CSI reporting.

Here, for the manner in which the terminal device determines the CSI computation delay requirement corresponding to the CSI report based on the first model, the above description with reference to FIG. 9 may be referred to.

In operation 1003, the network device triggers, through DCI according to the CSI computation delay requirement corresponding to the CSI report, the terminal device to perform AI/ML-based CSI reporting.

The CSI computation delay requirement includes a first delay requirement and/or a second delay requirement, the first delay requirement may be denoted as Z, and the second delay requirement may be denoted as Z'. The first delay requirement is used to determine a requirement (denoted as a first requirement) that an interval between a first OFDM symbol and a second OFDM symbol needs to meet. The second delay requirement is used to determine a requirement (referred to as a second requirement) that an interval between a third OFDM symbol and the second OFDM symbol needs to meet. Herein, the first OFDM symbol is a last OFDM symbol of aPDCCH carrying DCI, and the DCI is used to trigger the CSI reporting. The second OFDM symbol is a first OFDM symbol of a PUSCH carrying the CSI report. The third OFDM symbol is a last OFDM symbol on a CSI measurement resource corresponding to the CSI report.

In some embodiments, the network device determines a requirement (referred to as a first requirement) that the interval between the first OFDM symbol and the second OFDM symbol needs to meet according to the first delay requirement. The network device triggers, through DCI, the terminal device to perform the AI/ML-based CSI reporting. Herein, the interval between the first OFDM symbol and the second OFDM symbol meets the first requirement, that is, the interval between the first OFDM symbol and the second OFDM symbol is greater than or equal to the first requirement. If the interval between the first OFDM symbol and the second OFDM symbol cannot meet the first requirement, the network device may consider that the terminal device would not perform the CSI reporting, that is, the network device does not need to receive the CSI reported by the terminal. Here, for the relationship between the first requirement and the first delay requirement, the above description with reference to FIG. 9 may be referred to.

In some other embodiments, the network device determines a requirement (referred to as a second requirement) that the interval between the third OFDM symbol and the second OFDM symbol needs to meet according to the second delay requirement. The network device triggers, through DCI, the terminal device to perform the AI/ML-based CSI reporting. Herein, the interval between the third OFDM symbol and the second OFDM symbol meets the second requirement, that is, the interval between the third OFDM symbol and the second OFDM symbol is greater than or equal to the second requirement. If the interval between the third OFDM symbol and the second OFDM symbol cannot meet the second requirement, the network device may consider that the terminal device would not perform corresponding CSI measurement or CSI reporting, that is, the network device does not need to receive the CSI reported by the terminal device. Here, for the relationship between the second requirement and the second delay requirement, the above description with reference to FIG. 9 may be referred to.

In operation 1004, the terminal device determines whether performing theAI/ML-based CSI reporting or updating the AI/ML-based CSI report is needed, according to the CSI computation delay requirement corresponding to the CSI report.

If the CSI computation delay requirement can be met, the terminal device performs AI/ML-based CSI reporting through the PUSCH; otherwise, the terminal device does not perform the AI/ML-based CSI reporting, or the terminal device does not update the AI/ML-based CSI report. Specifically, there are the following cases.

Case 1) In some embodiments, the terminal device determines a first requirement $T_{proc,CSI}$ that the interval between the first OFDM symbol and the second OFDM symbol needs to meet according to the first delay requirement Z; if the interval between the first OFDM symbol and the second OFDM symbol is greater than or equal to the first requirement, the terminal device performs AI/ML-based CSI reporting through the PUSCH; otherwise, the terminal does not perform AI/ML-based CSI reporting. Specifically, if the CSI report is not multiplexed with other signals, the terminal device ignores the DCI and does not transmit the PUSCH, that is, the terminal device does not transmit the CSI report. If the CSI report is multiplexed with other signals, the terminal device transmits the PUSCH, and the PUSCH only carries other signals and does not carry CSI.

Case 2) In some other embodiments, if the CSI report is an aperiodic CSI report, and the CSI measurement resource corresponding to the CSI report is an aperiodic CSI-RS/CSI-IM resource, the terminal device determines a second requirement $T'_{proc,CSI}$ that the interval between the third OFDM symbol and the second OFDM symbol needs to meet according to the second delay requirement Z'; if the interval between the third OFDM symbol and the second OFDM symbol is greater than or equal to the second requirement, the terminal device performs AI/ML-based CSI reporting through the PUSCH; otherwise, the terminal device does not perform the AI/ML-based CSI reporting or update the AI/ML-based CSI report. Specifically, if the CSI report is not multiplexed with other signals, the terminal ignores the DCI and does not transmit the PUSCH, that is, the terminal device does not transmit the CSI report. If the CSI report is multiplexed with other signals, the terminal device transmits a PUSCH that carries the other signals and the CSI report, but does not need to perform CSI measurement or update the CSI report in the PUSCH.

Case 3) In another embodiment, if the CSI report is an aperiodic CSI report, and the CSI measurement resource corresponding to the CSI report is a periodic or semi-persistent CSI-RS/CSI-IM resource, and if the interval between the third OFDM symbol and the second OFDM symbol is greater than or equal to the second delay requirement Z', the terminal device performs AI/ML-based CSI reporting through the PUSCH; otherwise, the terminal device still performs CSI reporting through the PUSCH, but does not need to perform CSI measurement or update the CSI report in the PUSCH.

Application Example 2

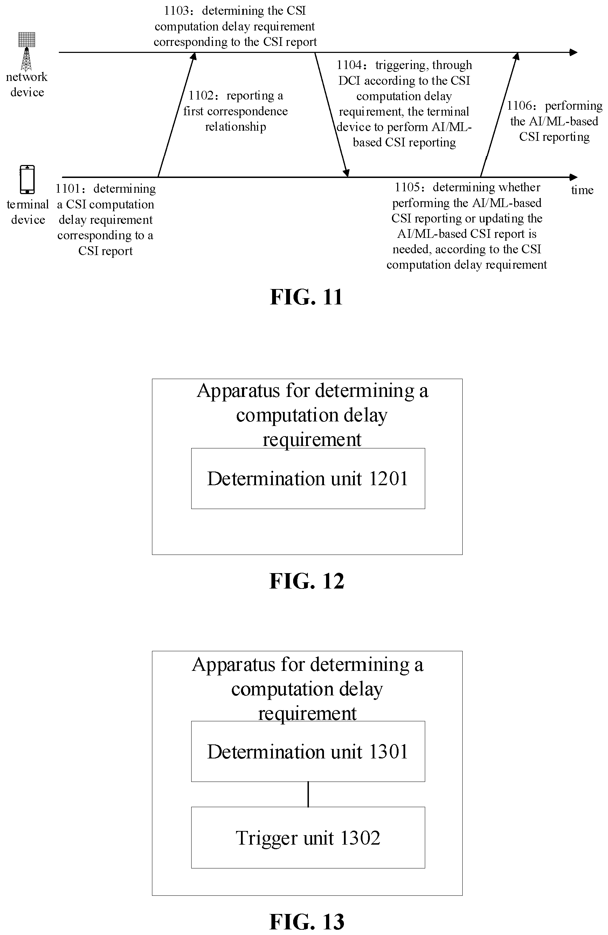

FIG. 11 is a third flowchart of a method for determining a computation delay requirement according to an embodiment of the present disclosure, and as shown in FIG. 11, the method includes all or part of the following contents.

In operation 1101, the terminal device determines a CSI computation delay requirement corresponding to a CSI report based on model information of a first model and a first correspondence relationship. The CSI report is an AI/ML-based CSI report, the first model is a model used for CSI reporting, and the first correspondence relationship is a correspondence relationship between the model information and the CSI computation delay requirement.

Here, the manner in which the terminal device determines the CSI computation delay request corresponding to the CSI report may refer to the related description with reference to FIG. 9.

In operation 1102, the terminal device reports the first correspondence relationship to the network device.

Here, the first correspondence relationship is a correspondence relationship between the model information and the CSI computation delay requirement. The model information includes at least one of an identification of the model, functionality of the model, a model group to which the model belongs, a CSI measurement resource used to acquire input information of the model, a number of output bits of the model, a maximum number of output bits of the model, or an output content of the model.

Here, the terminal device reports the first correspondence relationship to the network device in the following ways:

Way 1: the terminal device reports the CSI computation delay requirement corresponding to different model information to the network device.

Here, the terminal device may report the CSI computation delay requirement corresponding to different model information to the network device in the following manners.

1) The terminal device reports values of CSI computation delay requirement corresponding to different model information to the network device.

Exemplarily, the terminal device reports different values of Z/Z' for different models, so that the network device determines the corresponding value of Z/Z' according to the model used for the AI/ML-based CSI reporting.

Exemplarily, the terminal device reports different values of Z/Z' for different model groups, so that the network device determines the corresponding value of Z/Z' according to the model group to which the model used for the AI/ML-based CSI reporting belongs.

Exemplarily, the terminal device reports different values of Z/Z' for different CSI measurement resources, so that the network device determines the corresponding value of Z/Z' according to the CSI measurement resource used for the CSI reporting.

Exemplarily, the terminal device reports different values of Z/Z' for different numbers of output bits of the model (or the maximum number of output bits of the model), so that the network device determines the corresponding value of Z/Z' according to the number of output bits (or the maximum number of output bits) of the model used for the AI/ML-based CSI reporting.

Exemplarily, the terminal device reports different values of Z/Z' for different output contents of the model, so that the network device determines the corresponding value of Z/Z' according to the output content of the model used for the AI/ML-based CSI reporting.

2) The terminal device reports levels (which can be referred to as delay requirement levels) corresponding to the CSI computation delay requirement corresponding to different model information to the network device.

Here, the network device and the terminal device pre-agree on values of the CSI computation delay requirement corresponding to different levels, and the terminal device only needs to report a delay requirement level, and the network device may determine the corresponding CSI computation delay requirement according to the delay requirement level.

Exemplarily, referring to table 5 above, the network device and the terminal device may pre-agree on values of Z/Z' corresponding to three delay requirement levels, and the values of Z/Z' are further related to subcarrier spacings, the terminal device reports the delay requirement levels corresponding to different model information, and the network device may determine the values of Z/Z' corresponding to different model information according to the delay requirement levels.

Way 2: the terminal device reports to the network device offset (referred to as a first offset) of the CSI computation delay requirement corresponding to different model information relative to the reference CSI computation delay requirement, and the CSI computation delay requirement is equal to the reference CSI computation delay requirement plus the first offset. Here, the reference CSI computation delay requirement is pre-agreed between the terminal device and the network device, and the first offset is reported to the network device by the terminal device, and is used for the network device to determine the CSI computation delay requirement corresponding to the the AI/ML-based CSI report.

Here, the terminal device reports the first offset corresponding to the different model information to the network device in the following manner.

1) The terminal device reports the values of the first offset corresponding to the different model information to the network device.

Exemplarily, the terminal device reports different values of the first offset for different models, so that the network device determines the corresponding value of the first offset according to the model used for the AI/ML-based CSI reporting, and further determines the corresponding value of Z/Z' based on the value of the reference CSI computation delay requirement.

Exemplarily, the terminal device reports different values of the first offset for different model groups, so that the network device determines the corresponding value of the first offset according to the model group to which the model used for the AI/ML-based CSI reporting belongs, and then determines the corresponding value of Z/Z' based on the value of the reference CSI computation delay.

Exemplarily, the terminal device reports different values of the first offset for different CSI measurement resources, so that the network device determines the corresponding value of the first offset according to the CSI measurement resource used for the CSI reporting, and further determines the corresponding value of Z/Z' based on the value of the reference CSI computation delay requirement.

Exemplarily, the terminal device reports different values of the first offset for different model functionalities, so that the network device determines the corresponding value of the first offset according to the functionality of the model used for CSI reporting, and further determines the corresponding value of Z/Z' based on the value of the reference CSI computation delay requirement.

Exemplarily, the terminal device reports different values of the first offset for different number of output bits of the model (or the maximum number of output bits of the model), so that the network device determines the corresponding value of the first offset according to the number of output bits (or the maximum number of output bits) of the model used for the AI/ML-based CSI reporting, and then determines the corresponding value of Z/Z' based on the value of the reference CSI computation delay.

Exemplarily, the terminal device reports different values of the first offset for different output contents of the model, so that the network device determines the corresponding value of the first offset according to the output content of the model used for the AI/ML-based CSI reporting, and further determines the corresponding value of Z/Z' based on the value of the reference CSI computation delay.

2) The terminal device reports to the network device levels (which may be referred to as delay requirement levels) corresponding to the first offset corresponding to the different model information.

Here, the network device and the terminal device pre-agree on the values of the first offset corresponding to different levels, and the terminal device only needs to report a delay requirement level, and the network device can determine the corresponding first offset according to the delay requirement level, and then determine the corresponding CSI computation delay requirement based on the reference CSI computation delay requirement.

Exemplarily, referring to table 6 above, the network device and the terminal device may pre-agree the values of r/r 'corresponding to three delay requirement levels, the values of r/r' are also related to subcarrier spacings, the terminal device reports the delay requirement level corresponding to a different model information, and the network device may determine the value of r/r 'corresponding to the different model information according to the delay requirement level, and then determine the value of the corresponding Z/Z' based on the value of the reference CSI computation delay requirement.

In opereation 1103, the network device determines the CSI computation delay requirement corresponding to the CSI report based on the model information of the first model and the first correspondence relationship.

Here, for the manner in which the network device determines the CSI computation delay requirement corresponding to the CSI report, the above description with reference to FIG. 9 can be referred to.

In opereation 1104, the network device triggers, through DCI according to the CSI computation delay requirement corresponding to the CSI report, the terminal device to perform AI/ML-based CSI reporting.

Here, the network device triggers, through DCI according to the CSI computation delay requirement corresponding to the CSI report, the terminal device to perform AI/ML-based CSI reporting, and the above description with reference to FIGS. 9 and 10 may be referred to.

In opereation 1105, the terminal device determines whether performing the AI/ML-based CSI reporting or updating the AI/ML-based CSI report is needed, according to the CSI computation delay requirement corresponding to the CSI report.

Here, for the operation that the terminal device determines whether performing the AI/ML-based CSI reporting or updating the AI/ML-based CSI report is needed, according to the CSI computation delay requirement corresponding to the CSI report the description with reference to FIGS. 9 and 10 may be referred to.

In opereation 1106, if performing AI/ML-based CSI reporting is needed, the terminal device performs AI/ML-based CSI reporting.

The preferred embodiments of the present disclosure have been described in detail above with reference to the accompanying drawings, but the present disclosure is not limited to the specific details in the above-described embodiments. Within the scope of the technical concept of the present disclosure, various simple modifications can be made to the technical solutions of the present disclosure, and these simple modifications all fall within the scope of protection of the present disclosure. For example, various specific technical features described in the above-described detailed description can be combined in any suitable manner without contradiction, and various possible combinations will not be described separately in present disclosure in order to avoid unnecessary repetition. For example, various embodiments of the present disclosure may be combined arbitrarily, and as long as they do not violate the idea of the present disclosure, they should also be regarded as the content of the present disclosure. For another example, on the premise that there is no conflict, each embodiment described in the present disclosure and/or the technical features in each embodiment can be arbitrarily combined with the prior art, and the technical solution obtained after the combination should also fall within the scope of protection of the present disclosure.

It should also be understood that in various method embodiments of the present disclosure, the size of the sequence number of the above-described processes does not mean the sequence of execution, and the sequence of execution of each process should be determined by its function and internal logic, and should not constitute any limitation on the implementation of the embodiments of the present disclosure. In addition, in the embodiment of the present disclosure, the terms "downlink", "uplink", and "sidelink" are used to indicate the transmission direction of signals or data, wherein "downlink" is used to indicate that the transmission direction of signals or data is a first direction transmitted from the station to the user equipment of the cell, "uplink" is used to indicate that the transmission direction of signals or data is a second direction transmitted from the user equipment of the cell to the station, and "sidelink" is used to indicate that the transmission direction of signals or data is a third direction transmitted from the user equipment 1 to the user equipment 2. For example, "downlink signal" indicates that the transmission direction of the signal is the first direction. In addition, in the embodiment of the present disclosure, the term "and/or" is an association relationship describing an association object, and indicates that there may be three types of relationships. Specifically, A and/or B may represent three cases of A exists alone, both A and B exist, and B exists alone. In addition, the character "/" in this article generally indicates that the related objects before and after are in an "or" relationship.

FIG. 12 is a schematic diagram of a composition of an apparatus for determining a computation delay requirement according to an embodiment of the present disclosure, and is applied to a terminal device. As shown in FIG. 12, the apparatus for determining the computation delay requirement includes a determination unit 1201.

The determination unit 1201 is configured to determine a CSI computation delay requirement corresponding to a CSI report based on a first model. The CSI report is an AI/ML-based CSI report, and the first model is a model used for CSI reporting. The determination unit 1201 is further configured to determine whether to perform the CSI reporting and/or whether to update the CSI report based on the CSI computation delay requirement corresponding to the CSI report.

In some embodiments, the determination unit 1201 is configured to determine a CSI computation delay requirement corresponding to the CSI report based on the model information of the first model and a first correspondence relationship, and the first correspondence relationship is a correspondence relationship between the model information and the CSI computation delay requirement.

In some embodiments, the model information includes at least one of an identification of the model, functionality of the model, a model group to which the model belongs, a CSI measurement resource used to obtain input information of the model, a number of output bits of the model, a maximum number of output bits of the model, or an output content of the model.

In some embodiments, division of the model group is related to at least one of: a model level, a model complexity, or a model resolution.

In some embodiments, the division of the model group is performed by the terminal device, and is reported by the terminal device to a network device; or, the division of the model group is performed by a network device and configured by the network device to the terminal device.

In some embodiments, the first correspondence relationship is configured to the terminal device by a network device; or, the first correspondence relationship is reported by the terminal device to the network device; or, the first correspondence relationship is agreed upon in a protocol.

In some embodiments, the first correspondence relationship is reported by the terminal device to the network device, including: the first correspondence relationship is reported by the terminal device to the network device through UE capability information, and the UE capability information includes model information supported by the terminal device and a CSI computation delay requirement corresponding to each supported model information. Alternatively, the first correspondence relationship is reported by the terminal device to the network device through model indication information, and the model indication information indicates model information and a CSI computation delay requirement corresponding to the model information.

In some embodiments, in the first correspondence relationship, the CSI computation delay requirement is represented by a value of the CSI computation delay requirement or a level corresponding to the CSI computation delay requirement.

In some embodiments, values of the CSI computation delay requirement corresponding to different levels are configured by network devices or agreed upon in a protocol.

In some embodiments, in the first correspondence relationship, the CSI computation delay requirement is represented by a value of a first offset or a level corresponding to the first offset, and the first offset is an offset of the CSI computation delay requirement relative to a reference CSI computation delay requirement, and the reference CSI computation delay requirement is configured by a network device or agreed upon in a protocol.

In some embodiments, values of the first offset corresponding to the different levels are configured by the network device or agreed upon in a protocol.

In some embodiments, the determination unit 1201 is configured to determine to perform the CSI reporting if determining that the CSI computation delay requirement can be met; and/or, determine not to perform the CSI reporting or not ot update the CSI report, if determining that the CSI computation delay requirement cannot be met.

In some embodiments, the CSI processing delay requirement includes a first delay requirement and/or a second delay requirement. The first delay requirement is used to determine a first requirement that an interval between a first OFDM symbol and a second OFDM symbol needs to meet. The second delay requirement is used to determine a second requirement that an interval between the third OFDM symbol and the second OFDM symbol needs to be met. Herein, the first OFDM symbol is a last OFDM symbol of a PDCCH carrying DCI, the DCI being used to trigger the CSI reporting; the second OFDM symbol is a first OFDM symbol of the PUSCH carrying the CSI report; the third OFDM symbol is a last OFDM symbol on a CSI measurement resource corresponding to the CSI report.

In some embodiments, the CSI report is a CSI report obtained by AI/ML-based CSI compression of and/or a CSI report obtained by AI/ML-based CSI prediction.

Those skilled in the art should understand that the related description of the above-described apparatus for determining the computation delay requirement according to the embodiment of the present disclosure can be understood with reference to the related description of the method for determining the computation delay requirement according to the embodiment of the present disclosure.

FIG. 13 is a second schematic diagram of the structure and composition of the apparatus for determining the computation delay requirement according to the embodiment of the present disclosure, and is applied to a network device. As shown in FIG. 13, the apparatus for determining the computation delay requirement includes a determination unit 1301 and a trigger unit 1302.

The determination unit 1301 is configured to determine a CSI computation delay requirement corresponding to a CSI report based on a first model. The CSI reporting is a AI/ML-based CSI reporting, and the first model is a model used for CSI reporting.

The trigger unit 1302 is configured to trigger the terminal device to perform the CSI reporting based on the CSI computation delay requirement corresponding to the CSI report.

In some embodiments, the determination unit 1301 is configured to determine the CSI computation delay requirement corresponding to the CSI report based on model information of the first model and a first correspondence relationship, and the first correspondence relationship is a correspondence relationship between the model information and the CSI computation delay requirement.

In some embodiments, the model information includes at least one of an identification of the model, functionality of the model, a model group to which the model belongs, a CSI measurement resource used to obtain input information of the model, a number of output bits of the model, a maximum number of output bits of the model, or an output content of the model.

In some embodiments, division of the model group is related to at least one of: a model level, a model complexity, or a model resolution.

In some embodiments, the division of the model group is performed by a terminal device, and is reported by the terminal device to the network device; or, the division of the model group is performed by the network device and configured by the network device to the terminal device.

In some embodiments, the first correspondence is configured to the terminal device by a network device; Alternatively, the first correspondence relationship is reported by the terminal device to the network device; Alternatively, the first correspondence relationship is agreed upon in a protocol.

In some embodiments, the first correspondence relationship is reported by the terminal device to the network device, including: the first correspondence relationship is reported by the terminal device to the network device through UE capability information, and the UE capability information includes model information supported by the terminal device and CSI computation delay requirements corresponding to each supported model information. Alternatively, the first correspondence relationship is reported by the terminal device to the network device through model indication information, and the model indication information indicates model information and a CSI computation delay requirement corresponding to the model information.

In some embodiments, in the first correspondence relationship, the CSI computation delay requirement is represented by a value of the CSI computation delay requirement or by a level corresponding to the CSI computation delay requirement.

In some embodiments, values of the CSI computation delay requirement corresponding to different levels are configured by the network device or agreed upon in a protocol.

In some embodiments, in the first correspondence relationship, the CSI computation delay requirement is represented by a value of a first offset or a level corresponding to the first offset, and the first offset is an offset of the CSI computation delay requirement relative to a reference CSI computation delay requirement, and the reference CSI computation delay requirement is configured by the network device or agreed upon in a protocol.

In some embodiments, the value of the first offset corresponding to the different levels is configured by the network device or agreed upon in a protocol.

In some embodiments, the CSI processing delay requirement includes a first delay requirement and/or a second delay requirement; the first delay requirement is used to determine a first requirement that an interval between a first OFDM symbol and a second OFDM symbol needs to meet; the second delay requirement is used to determine a second requirement that an interval between a third OFDM symbol and the second OFDM symbol needs to meet. Herein, the first OFDM symbol is a last OFDM symbol of a PDCCH carrying DCI, and the DCI is used to trigger the CSI reporting; the second OFDM symbol is a first OFDM symbol of PUSCH carrying the CSI report; and the third OFDM symbol is a last OFDM symbol on a CSI measurement resource corresponding to the CSI report.

In some embodiments, the trigger unit 1302 is configured to determine, based on the CSI computation delay requirement, a first requirement that an interval between a first OFDM symbol and a second OFDM symbol needs to meet, and/or a second requirement that an interval between a third OFDM symbol and a second OFDM symbol needs to meet; and trigger the terminal device to perform the CSI reporting through DCI in accordance with the first requirement and/or the second requirement, where the interval between the first OFDM symbol and the second OFDM symbol meets the first requirement, and/or the interval between the third OFDM symbol and the second OFDM symbol meets the second requirement. Herein, the first OFDM symbol is a last OFDM symbol of a PDCCH carrying the DCI, and the DCI is used to trigger the CSI reporting; the second OFDM symbol is a first OFDM symbol of the PUSCH carrying the CSI reportcarrying the CSI report; and the third OFDM symbol is a last OFDM symbol om a CSI measurement resource corresponding to the CSI report.

In some embodiments, the CSI report is a CSI report obtained by AI/ML-based CSI compression and/or a CSI report obtained by AI/ML-based CSI prediction.

Those skilled in the art should understand that the related description of the above-described apparatus for determining the computation delay requirement according to the embodiment of the present disclosure can be understood with reference to the related description of the method for determining the computation delay requirement according to the embodiment of the present disclosure.

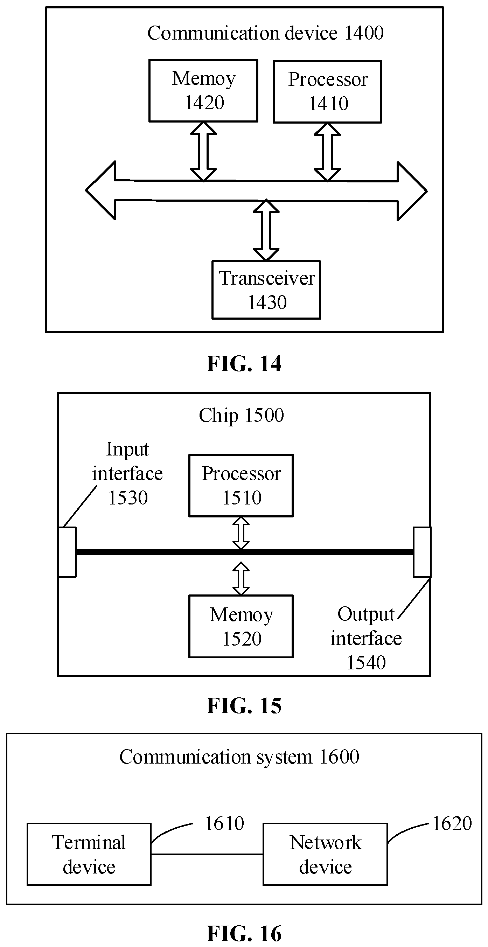

FIG. 14 is a schematic structural diagram of a communication device 1400 according to an embodiment of the present disclosure. The communication device may be a terminal device or a network device. The communication device 1400 illustrated in FIG. 14 includes a processor 1410, and the processor 1410 can call and execute a computer program from a memory to implement the method in the embodiment of the present disclosure.

In an embodiment, as shown in FIG. 14, the communication device 1400 may further include a memory 1420. The processor 1410 may call and execute a computer program from the memory 1420 to implement the method in the embodiment of the present disclosure.

The memory 1420 may be a separate device independent of the processor 1410 or may be integrated in the processor 1410.

In an embodiment, as shown in FIG. 14, the communication device 1400 may further include a transceiver 1430, and the processor 1410 may control the transceiver 1430 to communicate with other devices, specifically, may transmit information or data to other devices, or receive information or data transmitted by other devices.

Here, the transceiver 1430 may include a transmitter and a receiver. The transceiver 1430 may further include antennas, and the number of antennas may be one or more.

In an embodiment, the communication device 1400 may specifically be a network device according to an embodiment of the present disclosure, and the communication device 1400 may implement corresponding processes implemented by the network device in each method according to the embodiment of the present disclosure, and will not be described herein for the sake of brevity.

In an embodiment, the communication device 1400 may specifically be a mobile terminal/terminal device according to the embodiment of the present disclosure, and the communication device 1400 may implement corresponding processes implemented by the mobile terminal/terminal device in each method according to the embodiment of the present disclosure, and will not be described herein for the sake of conciseness.

FIG. 15 is a schematic structural diagram of a chip according to an embodiment of the present disclosure. The chip 1500 shown in FIG. 15 includes a processor 1510, which can call and execute a computer program from a memory to implement the method in the embodiment of the present disclosure.

In an embodiment, as shown in FIG. 15, the chip 1500 may further include a memory 1520. The processor 1510 may call and execute a computer program from the memory 1520 to implement the method in the embodiment of the present disclosure.

The memory 1520 may be a separate device independent of the processor 1510 or may be integrated in the processor 1510.

In an embodiment, the chip 1500 may further include an input interface 1530. The processor 1510 may control the input interface 1530 to communicate with other devices or chips, specifically, the processor 1510 may acquire information or data transmitted by other devices or chips.

In an embodiment, the chip 1500 may further include an output interface 1540. The processor 1510 may control the output interface 1540 to communicate with other devices or chips, specifically, may output information or data to other devices or chips.

In an embodiment, the chip can be applied to the network device in the embodiment of the present disclosure, and the chip can implement the corresponding process implemented by the network device in each method of the embodiment of the present disclosure, and will not be repeated here for the sake of brevity.

In an embodiment, the chip can be applied to the mobile terminal/terminal device in the embodiment of the present disclosure, and the chip can implement the corresponding flow implemented by the mobile terminal/terminal device in each method of the embodiment of the present disclosure, and will not be repeated here for the sake of brevity.

It should be understood that the chip mentioned in the embodiments of the present disclosure may also be referred to as a system-level chip, a sytem chip, a chip system, or a system-on-chip chip.

FIG. 16 is a schematic block diagram of a communication system 1600 according to an embodiment of the present disclosure. As shown in FIG. 16, the communication system 1600 includes a terminal device 1610 and a network device 1620.

Here, the terminal device 1610 may be used to implement the corresponding functions implemented by the terminal device in the above-described method, and the network device 1620 may be used to implement the corresponding functions implemented by the network device in the above-described method, which will not be described herein for the sake of brevity.

It should be understood that the processor of the embodiment of the present disclosure may be an integrated circuit chip having signal processing capabilities. In the implementation process, the steps of the above-described method embodiments may be completed by integrated logic circuits of hardware in the processor or instructions in the form of software. The processor described above may be a general-purpose processor, a Digital Signal Processor (DSP), an Application Specific Integrated Circuit (ASIC), a Field Programmable Gate Array (FPGA) or other programmable logic device, a discrete gate or transistor logic device, or a discrete hardware component. The methods, steps, and logical block diagrams disclosed in the embodiments of the present disclosure may be implemented or executed. The general purpose processor may be a microprocessor or the processor may be any conventional processor or the like. The steps of the method disclosed in connection with the embodiments of the present disclosure may be directly embodied as execution by the hardware decoding processor, or may be executed by combining hardware and software modules in the decoding processor. The software module may be located in a storage medium mature in the art, such as random access memory, flash memory, read-only memory, programmable read-only memory, or electrically erasable and writable programmable memory, registers, etc. The storage medium is located in the memory, and the processor reads the information in the memory, and combines its hardware to complete the steps of the above method.

It is understood that the memory in the embodiments of the present disclosure may be a volatile memory or a non-volatile memory, or may include both volatile and non-volatile memory. The non-volatile memory may be a Read-Only Memory (ROM), a Programmable ROM (PROM), an Erasable PROM (EPROM), an Electrically EPROM (EEPROM), or a flash memory. The volatile memory may be a Random Access Memory (RAM), which serves as an external cache. By way of example, but not limitation, many forms of RAM are available, such as Static RAM (SRAM), Dynamic RAM (DRAM), Synchronous DRAM (SDRAM), Double Data Rate SDRAM (DDR SDRAM), Enhanced SDRAM (ESDRAM), Synchlink DRAM (SLDRAM), and Direct Rambus RAM (DR RAM). It should be noted that the memory of the systems and methods described herein is intended to include, but is not limited to, these and any other suitable type of memory.

It should be understood that the above memory is illustrative but not limiting, for example, the memory in the embodiments of the present disclosure may also be a static random access memory (SRAM), a dynamic random access memory (DRAM), a synchronous dynamic random access memory (SDRAM), a double data rate synchronous dynamic random access memory (DDR SDRAM), an enhanced SDRAM (ESDRAM), a synch link dynamic random access memory (SLDRAM), a Direct Rambus RAM (DR RAM), and the like. That is, the memory in the embodiments of the present disclosure is intended to include, but is not limited to, these and any other suitable type of memory.

Embodiments of the present disclosure also provide a computer-readable storage medium for storing a computer program.

In an embodiment, the computer-readable storage medium can be applied to the network device in the embodiment of the present disclosure, and the computer program causes the computer to execute the corresponding processes implemented by the network device in each method in the embodiment of the present disclosure, and the description thereof will not be repeated here for the sake of brevity.

In an embodiment, the computer-readable storage medium can be applied to the mobile terminal/terminal device in the embodiment of the present disclosure, and the computer program causes the computer to execute the corresponding processes implemented by the mobile terminal/terminal device in each method of the embodiment of the present disclosure, and will not be repeated here for the sake of brevity.

Embodiments of the present disclosure also provide a computer program product including computer program instructions.

In an embodiment, the computer program product can be applied to the network device in the embodiment of the present disclosure, and the computer program instructions cause the computer to execute the corresponding processes implemented by the network device in each method in the embodiment of the present disclosure, and the description thereof is not repeated here for the sake of brevity.

In an embodiment, the computer program product can be applied to the mobile terminal/terminal device in the embodiment of the present disclosure, and the computer program instructions cause the computer to execute the corresponding processes implemented by the mobile terminal/terminal device in each method of the embodiment of the present disclosure, and will not be repeated here for the sake of brevity.

Embodiments of the present disclosure also provide a computer program.

In an embodiment, the computer program can be applied to the network device in the embodiment of the present disclosure, and when the computer program is running on the computer, the computer executes the corresponding processes implemented by the network device in each method of the embodiment of the present disclosure, and the description thereof is not repeated here for the sake of brevity.

In an embodiment, the computer program can be applied to the mobile terminal/terminal device in the embodiment of the present disclosure, and when the computer program is running on the computer, the computer executes the corresponding processes implemented by the mobile terminal/terminal device in each method of the embodiment of the present disclosure, which is not repeated here for the sake of brevity.

Those of ordinary skill in the art will appreciate that the elements and algorithmic steps of the various examples described in connection with the embodiments disclosed herein can be implemented in electronic hardware, or a combination of computer software and electronic hardware. Whether these functions are performed in hardware or software depends on the specific application and design constraints of the technical solution. Those skilled in the art may use different methods for implementing the described functions for each particular application, but such implementations should not be considered beyond the scope of the present disclosure.

Those skilled in the art can clearly understand that for convenience and conciseness of the description, the specific working processes of the systems, devices, and units described above may refer to the corresponding processes in the aforementioned method embodiments, and will not be repeatedly described herein.

In several embodiments provided herein, it should be understood that the disclosed systems, apparatuses, and methods may be implemented in other ways. For example, the device embodiments described above are merely schematic, for example, the division of units is only one logical function division, and there may be other division methods in actual implementation, for example, multiple units or components may be combined or integrated into another system, or some features may be ignored or not implemented. In addition, the coupling or direct coupling or communication connection between each other shown or discussed may be an indirect coupling or communication connection through some interface, device or unit, which may be electrical, mechanical or otherwise.

The units described as separate units may or may not be physically separate, and the units displayed as units may or may not be physical units, that is, they may be located in one place or may be distributed over a plurality of network units. Some or all of the units may be selected according to actual needs to achieve the purpose of the solution of the present embodiment.

In addition, each functional unit in each embodiment of the present disclosure may be integrated in one processing unit, each unit may be physically present alone, or two or more units may be integrated in one unit.

The functions may be stored in a computer-readable storage medium if implemented in the form of software functional units and sold or used as independent products. Based on this understanding, the technical solution of the present disclosure essentially or a part that contributes to the prior art or a part of the technical solution may be embodied in the form of a software product, which is stored in a storage medium and includes several instructions for causing a computer device (which may be a personal computer, a server, or a network device, etc.) to perform all or part of the steps of the method described in various embodiments of the present disclosure. The storage medium includes a USB disk, a removable hard disk, a Read-Only Memory (ROM), a Random Access Memory (RAM), a magnetic disk, or an optical disk that can store a program code.

The above is merely a specific embodiment of the present disclosure, but the scope of protection of the present disclosure is not limited thereto, and any person skilled in the art can easily think of changes or substitutions within the technical scope disclosed in the present disclosure, and should be covered within the scope of protection of the present disclosure. Therefore, the scope of protection of the present disclosure should be subject to the scope of protection of the claims.

**Claims**

1. A method for determining a computation delay requirement, the method comprising:

   determining, by a terminal device, a channel state information (CSI) computation delay requirement corresponding to a CSI report based on a first model, wherein the CSI report is an artificial intelligence/machine learning (AI/ML)-based CSI report, and the first model is a model used for CSI reporting; and
   determining, by the terminal device, whether to perform the CSI reporting and/or whether to update the CSI report based on the CSI computation delay requirement corresponding to the CSI report.

2. The method of claim 1, wherein the determining, by a terminal device, a channel state information (CSI) computation delay requirement corresponding to a CSI report based on a first model comprises:
   determining, by the terminal device, the CSI computation delay requirement corresponding to the CSI report based on model information of the first model and a first correspondence relationship, wherein the first correspondence relationship is a correspondence relationship between the model information and the CSI computation delay requirement.

3. The method of claim 2, wherein the model information includes at least one of an identification of the model, functionality of the model, a model group to which the model belongs, a CSI measurement resource used to obtain input information of the model, a number of output bits of the model, a maximum number of output bits of the model, or an output content of the model.

4. The method of claim 3, wherein division of the model group is related to at least one of: a model level, a model complexity, or a model resolution.

5. The method of claim 3 or 4, wherein

the division of the model group is performed by the terminal device, and is reported by the terminal device to a network device; or,

the division of the model group is performed by a network device, and is configured by the network device to the terminal device.

6. The method of any one of claims 2 to 5, wherein

the first correspondence relationship is configured to the terminal device by a network device; or,
the first correspondence relationship is reported by the terminal device to a network device; or,
the first correspondence relationship is agreed upon in a protocol.

7. The method of claim 6, wherein the first correspondence relationship is reported by the terminal device to the network device, comprising:

the first correspondence relationship is reported by the terminal device to the network device through UE capability information, the UE capability information comprising model information supported by the terminal device and a CSI computation delay requirement corresponding to each supported model information; or,
the first correspondence relationship is reported by the terminal device to the network device through model indication information, the model indication information indicating model information and a CSI computation delay requirement corresponding to the model information.

8. The method of any one of claims 2 to 7, wherein in the first correspondence relationship, the CSI computation delay requirement is represented by a value of the CSI computation delay requirement or a level corresponding to the CSI computation delay requirement.

9. The method of claim 8, wherein values of the CSI computation delay requirement corresponding to different levels are configured by the network device or agreed upon in a protocol.

10. The method of any one of claims 2 to 7, wherein in the first correspondence relationship, the CSI computation delay requirement is expressed by a value of a first offset or a level corresponding to the first offest, the first offset being an offset of the CSI computation delay requirement relative to a reference CSI computation delay requirement configured by a network device or agreed upon in a protocol.

11. The method of claim 10, wherein values of the first offset corresponding to the different levels are configured by the network device or agreed upon in a protocol.

12. The method of any one of claims 1 to 11, wherein the determining, by the terminal device, whether to perform the CSI reporting and/or whether to update the CSI report based on the CSI computation delay requirement corresponding to the CSI report comprises:

if the terminal device determines that the CSI computation delay requirement can be met, determining, by the terminal device, to perform the CSI reporting; and/or,
if the terminal device determines that the CSI computation delay requirement cannot be met, determining, by the terminal device, not to perform the CSI reporting or not to update the CSI report.

13. The method of any one of claims 1 to 12, wherein the CSI processing delay requirement comprises a first delay requirement and/or a second delay requirement;

the first delay requirement is used to determine a first requirement that an interval between a first orthogonal frequency division multiplexed (OFDM) symbol and a second OFDM symbol needs to meet;
the second delay requirement is used to determine a second requirement that an interval between a third OFDM symbol and the second OFDM symbol needs to meet;
wherein the first OFDM symbol is a last OFDM symbol of a physical downlink control channel (PDCCH) carrying downlink control information (DCI), and the DCI is used to trigger the CSI reporting; the second OFDM symbol is a first OFDM symbol of a physical uplink shared channel (PUSCH) carrying the CSI report; and the third OFDM symbol is a last OFDM symbol on a CSI measurement resource corresponding to the CSI report.

14. The method of any one of claims 1 to 13, wherein the CSI report is a CSI report obtained by AI/ML-based CSI compression of and/or a CSI report obtained by AI/ML-based CSI prediction.

15. A method of determining a computation delay requirement, the method comprising:

determining, by a network device, a channel state information (CSI) computation delay requirement corresponding to a CSI report based on a first model, wherein the CSI report is an artificial intelligence/machine learning (AI/ML)-based CSI report, and the first model is a model used for the CSI report; and
triggering, by the network device, the terminal device to perform the CSI reporting based on the CSI computation delay requirement corresponding to the CSI report.

16. The method of claim 15, wherein the determining, by a network device, a channel state information (CSI) computation delay requirement corresponding to a CSI report based on a first model comprises:
determining, by the network device, the CSI computation delay requirement corresponding to the CSI report based on model information of the first model and a first correspondence relationship, wherein the first correspondence relationship is a correspondence relationship between the model information and the CSI computation delay requirement.

17. The method of claim 16, wherein the model information includes at least one of an identification of the model, functionality of the model, a model group to which the model belongs, a CSI measurement resource used to obtain input information of the model, a number of output bits of the model, a maximum number of output bits of the model, or an output content of the model.

18. The method of claim 17, wherein division of the model group is related to at least one of: a model level, a model complexity, or a model resolution.

19. The method of claim 17 or 18, wherein

the division of the model group is performed by a terminal device, and is reported by the terminal device to the network device; or,
the division of the model group is performed by the network device, and is configured by the network device to the terminal device.

20. The method of any one of claims 16 to 19, wherein

the first correspondence relationship is configured to a terminal device by the network device; or,
the first correspondence relationship is reported by the terminal device to the network device; or,
the first correspondence relationship is agreed upon in a protocol.

21. The method of claim 20, wherein the first correspondence relationship is reported by the terminal device to the network device, comprising:

the first correspondence relationship is reported by the terminal device to the network device through UE capability information, and the UE capability information comprising model information supported by the terminal device and a CSI computation delay requirement corresponding to each supported model information; or,
the first correspondence relationship is reported by the terminal device to the network device through model indication information, the model indication information indicating model information and the CSI computation delay requirement corresponding to the model information.

22. The method of any one of claims 16 to 21, wherein in the first correspondence relationship, the CSI computation delay requirement is represented by a value of the CSI computation delay requirement or by a level corresponding to the CSI computation delay requirement.

23. The method of claim 22, wherein values of the CSI computation delay requirement corresponding to different levels are configured by the network device or agreed upon in a protocol.

24. The method of any one of claims 16 to 21, wherein in the first correspondence relationship, the CSI computation delay requirement is represented by a value of a first offset or a level corresponding to the first offest, the first offset being an offset of the CSI computation delay requirement relative to a reference CSI computation delay requirement configured by the network device or agreed upon in a protocol.

25. The method of claim 24, wherein the value of the first offset corresponding to the different levels is configured by the network device or agreed upon in a protocol.

26. The method of any one of claims 15 to 25, wherein the CSI processing delay requirement comprises a first delay requirement and/or a second delay requirement;

the first delay requirement is used to determine a first requirement that an interval between a first orthogonal frequency division multiplexed (OFDM) symbol and a second OFDM symbol needs to meet; the second delay requirement is used to determine a second requirement that an interval between a third OFDM symbol and the second OFDM symbol needs to meet; wherein the first OFDM symbol is a last OFDM symbol of a physical downlink control channel (PDCCH) carrying downlink control information (DCI), and the DCI is used to trigger the CSI reporting; the second OFDM symbol is a first OFDM symbol of a physical uplink shared channel (PUSCH) carrying the CSI report; and the third OFDM symbol is a last OFDM symbol on a CSI measurement resource corresponding to the CSI report.

27. The method of any one of claims 15 to 26, wherein the triggering, by the network device, the terminal device to perform the CSI reporting based on the CSI computation delay requirement corresponding to the CSI report comprises:

determining, by the network device, based on the CSI computation delay requirement, a first requirement that an interval between a first OFDM symbol and a second OFDM symbol needs to meet, and/or a second requirement that an interval between a third OFDM symbol and a second OFDM symbol needs to meet; and triggering, by the network device, the terminal device to perform the CSI reporting through DCI in accordance with the first requirement and/or the second requirement, wherein the interval between the first OFDM symbol and the second OFDM symbol meets the first requirement, and/or the interval between the third OFDM symbol and the second OFDM symbol meets the second requirement; wherein the first OFDM symbol is a last OFDM symbol of a PDCCH carrying DCI, and the DCI is used to trigger the CSI reporting; the second OFDM symbol is a first OFDM symbol of the PUSCH carrying the CSI report; and the third OFDM symbol is a last OFDM symbol on a CSI measurement resource corresponding to the CSI report.

28. The method of any one of claims 15 to 27, wherein the CSI report is a CSI report obtained by AI/ML-based CSI compression and/or a CSI report obtained by AI/ML-based CSI prediction.

29. An apparatus for determining a computation delay requirement, applied to a terminal device, the apparatus comprising:
a determination unit, configured to determine a channel state information (CSI) computation delay requirement corresponding to a CSI report based on a first model, wherein the CSI report is an artificial intelligence/machine learning (AI/ML)-based CSI report, and the first model is a model used for CSI reporting; and determine whether to perform the CSI reporting and/or whether to update the CSI report based on the CSI computation delay requirement corresponding to the CSI report.

30. An apparatus for determining a computation delay requirement, applied to a network device, the apparatus comprising:

a determination unit, configured to determine a channel state information (CSI) computation delay requirement corresponding to a CSI report based on a first model, wherein the CSI report is an artificial intelligence/machine learning (AI/ML)-based CSI report, and the first model is a model used for CSI reporting; a trigger unit, configured to trigger the terminal device to perform the CSI reporting based on the CSI computation delay requirement corresponding to the CSI report.

31. A terminal device comprising:

a memory storing a computer program; and a processor, configured to call and execute the computer program stored in the memory to cause the terminal device to perform the method of any one of claims 1 to 14.

32. A network device comprising:

a memory storing a computer program; and
a processor, configured to call and execute the computer program stored in the memory to cause the terminal device to perform the method of any one of claims 15 to 28.

33. A chip comprising:
a processor, configured to call and execute the computer program from a memory, such that a device on which the chip is mounted performs the method of any one of claims 1 to 14 or the method of any one of claims 15 to 28.

34. A computer-readable storage medium, in which a computer program is stored, wherein the computer program causes a computer to perform the method of any one of claims 1 to 14 or the method of any one of claims 15 to 28.

35. A computer program product comprising computer program instructions that cause a computer to perform the method of any one of claims 1 to 14 or the method of any one of claims 15 to 28.

36. A computer program that causes a computer to perform the method of any one of claims 1 to 14 or the method of any one of claims 15 to 28.

**FIG. 1**

| | |
|---|---|
| periodic CSI report | |
| semi-persistent CSI report（PUCCH） | |
| semi-persistent CSI report（PUSCH） | |
| aperiodic CSI report | |

**FIG. 2**

T> $T_{proc,CSI}$

$T_{proc,CSI}$

DCI

Symbol $Z_{ref}$

PUSCH

semi-persistent/
aperiodic CSI report

**FIG. 3**

T> $T'_{proc,CSI}$

Aperiodic CSI-RS/CSI-IM

$T'_{proc,CSI}$

DCI

Symbol $Z'_{ref}$

PUSCH

aperiodic CSI
report

**FIG. 4**

T>Z'

periodic/semi-persistent
CSI-RS/CSI-IM

PUSCH

DCI

aperiodic CSI report

**FIG. 5**

**FIG. 6**

**FIG. 7**

**FIG. 8**

EP 4 757 380 A1

The network device determines a CSI computation delay requirement corresponding to a CSI report based on a first model. The terminal device determines, based on the first model, the CSI computation delay requirement corresponding to the CSI report. The CSI report is a AI/ML-based CSI report, and the first model is a model used for CSI reporting    901

The network device triggers the terminal device to perform the CSI reporting based on the CSI computation delay requirement corresponding to the CSI report. The terminal device determines whether to perform the CSI reporting and/or whether to update the CSI report based on the CSI computation delay requirement corresponding to the CSI report    902

**FIG. 9**

The network device determines a CSI computation delay requirement corresponding to a CSI report based on a first model. The CSI report is an AI/ML-based CSI report, and the first model is a model used for CSI reporting    1001

The terminal device determines the CSI computation delay requirement corresponding to the CSI report based on the first model. The CSI report is an AI/ML-based CSI report, and the first model is a model used for CSI reporting    1002

The network device triggers, through DCI according to the CSI computation delay requirement corresponding to the CSI report, the terminal device to perform AI/ML-based CSI reporting    1003

The terminal device determines whether performing AI/ML-based CSI reporting or updating the AI/ML-based CSI report is needed, according to the CSI computation delay requirement corresponding to the CSI report    1004

**FIG. 10**

1103: determining the CSI
computation delay requirement
corresponding to the CSI report

network
device

1104: triggering, through
DCI according to the CSI
computation delay
requirement, the terminal
device to perform AI/ML-
based CSI reporting

1102: reporting a
first correspondence
relationship

1106: performing
the AI/ML-based
CSI reporting

1101: determining
terminal   a CSI computation
device     delay requirement
corresponding to a
CSI report

1105: determining whether
performing the AI/ML-based
CSI reporting or updating the
AI/ML-based CSI report is
needed, according to the CSI
computation delay requirement

time

**FIG. 11**

Apparatus for determining a
computation delay
requirement

Determination unit 1201

**FIG. 12**

Apparatus for determining a
computation delay
requirement

Determination unit 1301

Trigger unit 1302

**FIG. 13**

Communication device 1400

Memoy
1420

Processor
1410

Transceiver
1430

**FIG. 14**

Chip 1500

Input
interface
1530

Processor
1510

Memoy
1520

Output
interface
1540

**FIG. 15**

Communication system 1600

Terminal
device
1610

Network
device
1620

**FIG. 16**

## INTERNATIONAL SEARCH REPORT

International application No.

**PCT/CN2023/109981**

| A. | CLASSIFICATION OF SUBJECT MATTER |
|---|---|

H04W24/02(2009.01)i

According to International Patent Classification (IPC) or to both national classification and IPC

| B. | FIELDS SEARCHED |
|---|---|

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNABS; CNTXT; CNKI; VEN; USTXT; WOTXT; EPTXT; 3GPP: 信道状态信息, 时延, 延迟, 人工智能, 机器学习, 预测, 测量, 上报, 模型, 参考信号, CSI, RS, PUSCH, DCI, AI, Machine Learning, D2D

| C. | DOCUMENTS CONSIDERED TO BE RELEVANT |
|---|---|

| Category* | Citation of document, with indication, where appropriate, of the relevant passages | Relevant to claim No. |
|---|---|---|
| X | WO 2023024107 A1 (NEC CORP. et al.) 02 March 2023 (2023-03-02) description, paragraphs [0076]-[0138] | 1-36 |
| A | CN 113162739 A (VIVO COMMUNICATION TECHNOLOGY CO., LTD.) 23 July 2021 (2021-07-23) entire document | 1-36 |
| A | CN 114760654 A (BEIJING UNISOC COMMUNICATION TECHNOLOGY CO., LTD.) 15 July 2022 (2022-07-15) entire document | 1-36 |
| A | CN 115473614 A (CHINA MOBILE COMMUNICATION CO., LTD., RESEARCH INSTITUTE et al.) 13 December 2022 (2022-12-13) entire document | 1-36 |

☐ Further documents are listed in the continuation of Box C.   ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **25 March 2024** | **27 March 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/109981**

| Patent document cited in search report | | | Publication date (day/month/year) | Patent family member(s) | | | Publication date (day/month/year) |
|---|---|---|---|---|---|---|---|
| WO | 2023024107 | A1 | 02 March 2023 | None | | | |
| CN | 113162739 | A | 23 July 2021 | WO | 2021147956 | A1 | 29 July 2021 |
| CN | 114760654 | A | 15 July 2022 | WO | 2022148490 | A1 | 14 July 2022 |
| CN | 115473614 | A | 13 December 2022 | None | | | |

Form PCT/ISA/210 (patent family annex) (July 2022)